(19) Europäisches Patentamt
European Patent Office
Office européen des brevets

(11) **EP 3 123 199 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **15735620.5**

(22) Anmeldetag: **23.03.2015**

(51) Int Cl.:
*G01S 13/00* *(2006.01)* *G01S 13/34* *(2006.01)*
*G01S 13/87* *(2006.01)* *G01S 13/74* *(2006.01)*
*G01S 13/90* *(2006.01)*

(86) Internationale Anmeldenummer:
**PCT/DE2015/100119**

(87) Internationale Veröffentlichungsnummer:
**WO 2015/144134 (01.10.2015 Gazette 2015/39)**

(54) **VERFAHREN IN EINEM RADARSYSTEM, RADARSYSTEM UND VORRICHTUNG EINES RADARSYSTEMS**

METHOD IN A RADAR SYSTEM, RADAR SYSTEM, AND DEVICE OF A RADAR SYSTEM

PROCÉDÉ MIS EN OEUVRE DANS UN SYSTÈME DE RADAR, SYSTÈME DE RADAR ET DISPOSITIF D'UN SYSTÈME DE RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2014 DE 102014104273**

(43) Veröffentlichungstag der Anmeldung:
**01.02.2017 Patentblatt 2017/05**

(60) Teilanmeldung:
**19191667.5 / 3 588 134**

(73) Patentinhaber: Symeo GmbH
**85579 Neubiberg (DE)**

(72) Erfinder:
• GULDEN, Peter
**85435 Erding (DE)**
• VOSSIEK, Martin
**90766 Fürth (DE)**

(74) Vertreter: Pfrang, Tilman
**Meissner Bolte Patentanwälte
Rechtsanwälte Partnerschaft mbB
Widenmayerstraße 47
80538 München (DE)**

(56) Entgegenhaltungen:
**WO-A1-2010/019975 DE-A1-102005 000 732
US-A1- 2001 004 601**

• STELZER A ET AL: "Precise distance measurement with cooperative FMCW radar units", RADIO AND WIRELESS SYMPOSIUM, 2008 IEEE, IEEE, PISCATAWAY, NJ, USA, 22. Januar 2008 (2008-01-22), Seiten 771-774, XP031237276, ISBN: 978-1-4244-1462-8
• STEFAN SCHEIBLHOFER ET AL: "Performance analysis of cooperative FMCW radar distance measurement systems", MICROWAVE SYMPOSIUM DIGEST, 2008 IEEE MTT-S INTERNATIONAL, IEEE, PISCATAWAY, NJ, USA, 15. Juni 2008 (2008-06-15), Seiten 121-124, XP031441388, ISBN: 978-1-4244-1780-3 in der Anmeldung erwähnt
• VOSSIEK M ET AL: "Inverse Synthetic Aperture Secondary Radar Concept for Precise Wireless Positioning", IEEE TRANSACTIONS ON MICROWAVE THEORY AND TECHNIQUES, IEEE SERVICE CENTER, PISCATAWAY, NJ, US, Bd. 55, Nr. 11, 1. November 2007 (2007-11-01), Seiten 2447-2453, XP011195400, ISSN: 0018-9480, DOI: 10.1109/TMTT.2007.908668
• R. MIESEN ET AL: "UHF RFID Localization Based on Synthetic Apertures", IEEE TRANSACTIONS ON AUTOMATION SCIENCE AND ENGINEERING, Bd. 10, Nr. 3, 1. Juli 2013 (2013-07-01), Seiten 807-815, XP055213239, ISSN: 1545-5955, DOI: 10.1109/TASE.2012.2224656

- KONG SUNWOO ET AL: "Wireless Cooperative Synchronization of Coherent UWB MIMO Radar", IEEE TRANSACTIONS ON MICROWAVE THEORY AND TECHNIQUES, IEEE SERVICE CENTER, PISCATAWAY, NJ, US, Bd. 62, Nr. 1, 1. Januar 2014 (2014-01-01) , Seiten 154-165, XP011536024, ISSN: 0018-9480, DOI: 10.1109/TMTT.2013.2291541 [gefunden am 2014-01-01]
- Ren-Hui Xu ET AL: "Survey on the Radar-Based Communication System", , 1. Januar 2014 (2014-01-01), XP055213246, Gefunden im Internet: URL:http://www.researchgate.net/publicatio n/268802143_ [gefunden am 2015-09-14]
- FEGER R ET AL: "A 77-GHz FMCW MIMO radar based on loosely coupled stations", MICROWAVE CONFERENCE (GEMIC), 2012 THE 7TH GERMAN, IEEE, 12 March 2012 (2012-03-12), pages 1-4, XP032169156, ISBN: 978-1-4577-2096-3
- FEGER R ET AL: "A 77-GHz cooperative secondary radar system for local positioning applications", MICROWAVE SYMPOSIUM DIGEST (MTT), 2012 IEEE MTT-S INTERNATIONAL, IEEE, 17 June 2012 (2012-06-17), pages 1-3, XP032217002, DOI: 10.1109/MWSYM.2012.6259486 ISBN: 978-1-4673-1085-7

## Beschreibung

Die Erfindung bezieht sich auf ein Verfahren in einem Radarsystem, ein Radarsystem bzw. eine Vorrichtung eines Radarsystems. Insbesondere gilt dies für eine Radaranordnung mit verteilten Sende-Empfangseinheiten.

WO 2010/019975 A1 beschreibt ein Radarsystem, bei dem gesendete und empfangene Signale gemischt werden. Dabei werden u. a. ausgewertete Messdaten einer Rechenstufe zur Verrechnung zur Verfügung gestellt. Ähnliches ist in Stelzer A. et al. "Precise distance measurement with cooperative FMCW radar units", Radio and Wireless Symposium, 2008 IEEE, IEEE, Piscataway, NJ, USA, 22. Januar 2008, Seiten 771-774, beschrieben.

US 2001/004601 A1 beschreibt ein Verfahren, um die Position eines mobilen RF-Sende-Empfängers in einem Kommunikationssystem zu bestimmen.

Feger R. et al, "A 77-GHz FMCW MIMO radar based on loosely coupled stations", Microwave Conference (GMIC), 2012 The 7th German, IEEE, 12. März 2012, Seiten 1-4, und Feger R. et al, "A 77-GHz cooperative secondary radar system for local positioning applications", Microwave Symposium Digest (MTT), 2012 IEEE MTT-S International, IEEE, 17. Juni 2012, Seiten 1-3, beschreiben Radar-Verfahren, bei denen vollständige Signale zu einem Prozessor übertragen werden, um dort bearbeitet zu werden.

In der Radartechnik wird zwischen Primärradaren und Sekundärradaren unterschieden. Primärradar bezeichnet Radaranlagen, die passiv reflektierte Signal-Echos von zuvor ausgestrahlten Hochfrequenzsignalen analysieren. Bei einem Sekundärradar werden die von einer ersten Radareinheit zuvor ausgestrahlten Hochfrequenzsignale in einer zweiten Radareinheit empfangen. Letztere sendet dann aktiv ein Antwortsignal zur ersten Radareinheit zurück. Sekundärradare werden mitunter auch Transpondersystem genannt, wobei dann die erste Radareinheit häufig als Basisstation und die zweite Radareinheit als Transponder bezeichnet wird. Ein Primärradar empfängt und verarbeitet ein eigenes, selber ausgesendetes Signal, während ein Sekundärradar ein fremdes, in einer anderen Einheit generiertes Signal empfängt und verarbeitet.

Radarverfahren mit synthetischer Apertur (SA) sind sowohl zur Radar-Bildgebung als auch zur Ortung von Transpondern bekannt. Gängige Verfahren und Ausführungsformen finden sich z. B. im Fachbuch "Inverse Synthetic Aperture Radar Imaging with Matlab Algorithms", Kapitel 3 und 4, oder in R. Miesen, F. Kirsch und M. Vossiek, "UHF RFID Localization Based on Synthetic Apertures", IEEE Transactions on Automation Science and Engineering, vol. 10, no. 3, pp. 807-815, July 2013, oder in G. Li, R. Ebelt und M. Vossiek, "A Novel Sequential Monte Carlo Method Based Synthetic Aperture Reconstruction Approach for Real-Time 3D Wireless Local Positioning", Frequenz: Journal of RF-Engineering and Telecommunications, vol. 66, no. 11-12, pp. 363-371, Nov. 2012. Bekannt sind SA-Verfahren auch aus z. B. US 7948431 B2, US 8299959 B2 und dem in diesen Schriften dargelegten Stand der Technik.

Allgemein bekannt ist, dass SA-Verfahren mit allen kohärenten Wellenformen, z. B. im Radarbereich mit elektromagnetischen, durchgeführt werden können. Im Bereich der Radarsensorik spricht man in diesem Zusammenhang zumeist von SAR (Synthetic Aperture Radar / Radar mit synthetischer Apertur) oder auch SDRS (Software-Defined Radar Sensors / Software-definierte Radarsensoren) oder MIMO (multiple input multiple output / Mehrfach-Eingangs-Mehrfach-Ausgangs-) Radar.

Auch Signale von Wellenquellen, deren Verlauf und Kohärenz der Empfänger nicht kennt, können mit SA-Verfahren verarbeitet werden, wenn aus an zumindest zwei räumlich getrennten Orten empfangenen Signalen ein Signal gebildet wird, das nicht mehr eine Absolutphase sondern Phasendifferenzen der Signale beschreibt. Dieser Ansatz ist auch unter dem Begriff Radar-Interferometrie bekannt oder für den Bereich der Radiometrie in Ruf, CS.; Swift, CT.; Tanner, A.B.; Le Vine, D.M., "Interferometric synthetic aperture microwave radiometry for the remote sensing of the Earth", Geoscience and Remote Sensing, IEEE Transactions on , vol. 26, no. 5, pp. 597, 611, Sep 1988 beschrieben. Auch bei diesen Verfahren ist jedoch zu fordern, dass die zumindest an zwei räumlich getrennten Orten empfangenen Signale von kohärent arbeitenden Empfängern empfangen werden, um so die Phasendifferenzen zwischen den zumindest zwei Signalen bestimmen zu können. Mit nur zwei Empfangsorten ist es bei derartigen Verfahren aber nicht möglich eine Entfernung zur Wellenquelle zu bestimmen.

Bekannt ist außerdem eine Vielzahl von Sekundärradarverfahren, wie sie z. B. beschrieben sind in US 7940743 B2, in Stelzer, A., Fischer, A., Vossiek, M.: "A New Technology for Precise Position Measurement-LPM", Microwave Symposium Digest, 2004, IEEE MTT-S International, Vol. 2, 6-11, June 2004, S 655-658, oder in R. Gierlich, J. Huttner, A. Ziroff, und M. Huemer, "Indoor positioning utilizing fractional-N PLL synthesizer and multi-channel base stations", Wireless Technology, 2008, EuWiT 2008, European Conference on, 2008, pp. 49-52.

Im Bereich der Radar-Funkortungs- und Kommunikationstechnik ist es auch bekannt, die Signale mehrerer Sender durch einen Multiplexbetrieb zu trennen. Code-Zeit oder Frequenz-Multiplex sind gängige Multiplexverfahren. In Roehr, S.; Gulden, P.; Vossiek, M., "Precise Distance and Velocity Measurement for Real Time Locating in Multipath Environments Using a Frequency-Modulated Continuous-Wave Secondary Radar Approach", Microwave Theory and Techniques, IEEE Transactions on, vol. 56, no. 10, pp. 2329, 2339, Oct. 2008 wird beispielsweise gezeigt, wie ein Multiplexing mit FMCW-Signalen (FMCW: Frequency Modulated Continuous Wave / frequenzmodulierte kontinuierliche Welle) realisierbar ist. In Sturm, Christian, et al."Spectrally interleaved multicarrier signals for radar network applications and multi-input multi-output radar" IET Radar, Sonar & Navigation, 2013, 7. Jg., Nr. 3, S. 261-269 und in GUTIERREZ DEL ARROYO, Jose R.; JACKSON, Julie Ann; TEMPLE, Michael A. "Receive signal processing for OFDM-based radar imaging" In: Acoustics, Speech and Signal Processing (ICASSP), 2013 IEEE International Conference on. IEEE, 2013, S. 2775-2779, werden OFDM- Signale (OFDM: Orthogonal Frequency-Division Multiplexing / Orthogonales Frequenzmultiplexverfahren) für das Multiplexing verwendet.

Bekannt sind Radarverfahren, die sogenannte Multirampen-FMCW-Signale zur Entfernungs- und Geschwindigkeitsmessung verwenden, z. B. aus: Ali, F.; Vossiek, M., "Detection of weak moving targets based on 2-D range-Doppler FMCW radar Fourier processing", German Microwave Conference, 2010 , pp. 214, 217, 15-17, March 2010, und aus dem darin zitierten Stand der Technik sowie aus US 020140022111 A1.

Allgemein bekannt sind Sekundärradarverfahren und Sekundärradaranordnungen aus Scheiblhofer, Stefan, et al., "Performance analysis of cooperative FMCW radar distance measurement Systems", In: Microwave Symposium Digest, 2008 IEEE MTT-S International. IEEE, 2008, S. 121-124 und Roehr, S.; Gulden, P.; Vossiek, M., "Precise Distance and Velocity Measurement for Real Time Locating in Multipath Environments Using a Frequency-Modulated Continuous-Wave Secondary Radar Approach", Microwave Theory and Techniques, IEEE Transactions on, vol. 56, no. 10, pp. 2329, 2339, Oct. 2008. Diese Verfahren beruhen entweder auf einer nicht kohärenten Synchronisation oder dem Übermitteln der Differenz der Frequenz der heruntergemischten Signale. Beide Verfahren sind somit nicht zur kohärenten Entfernungsmessung und als Grundlage für SAR-Verfahren geeignet.

Die Aufgabe der Erfindung besteht darin, eine alternative Verfahrensweise und Systemanordnung vorzuschlagen, welche eine kohärente Entfernungsmessung zwischen Einheiten ermöglicht. Insbesondere soll eine hochgenaue Entfernungsmessung zwischen Sekundärradareinheiten und für Radar allgemein eine Synthetisierung größerer Aperturen und/oder eine höhere erreichbare Auflösung ermöglicht werden.

Diese Aufgabe wird durch ein Verfahren in einem Radarsystem mit den Merkmalen des Patentanspruchs 1, ein Radarsystem nach Anspruch 13 bzw. eine Vorrichtung eines Radarsystems mit den Merkmalen des Patentanspruchs 16 gelöst. Vorteilhafte Ausgestaltungen sind Gegenstand von abhängigen Ansprüchen.

Erfindungsgemäß vorgeschlagen wird demgemäß ein Verfahren in einem Radarsystem, bei dem in einer ersten nicht-kohärenten Sende-Empfangseinheit ein erstes Signal erzeugt und über einen Pfad gesendet, insbesondere ausgestrahlt wird, in einer weiteren, insbesondere zweiten nicht-kohärenten Sende-Empfangseinheit ein erstes Signal erzeugt und über den Pfad gesendet, insbesondere ausgestrahlt wird, in der ersten Sende-Empfangseinheit ein Vergleichssignal aus deren erstem Signal und aus einem solchen von der weiteren Sende-Empfangseinheit über den Pfad empfangenen ersten Signal gebildet wird und in der weiteren Sende-Empfangseinheit ein weiteres Vergleichssignal aus deren erstem Signal und aus einem solchen von der ersten Sende-Empfangseinheit über den Pfad empfangenen ersten Signal gebildet wird, wobei das weitere Vergleichssignal von der weiteren Sende-Empfangseinheit zu der ersten Sende-Empfangseinheit übertragen, insbesondere kommuniziert wird. Weitere Merkmale ergeben sich aus Anspruch 1.

Der Begriff "erstes Signal" anstelle von nur "Signal" dient insbesondere als begriffliche Abgrenzung gegenüber den Vergleichssignalen und Vergleichs-Vergleichssignalen. Ein solches der Vergleichssignale entspricht insbesondere einem Vergleichssignal, welches in einer ersten Vergleichsstufe in einer der beiden Sende-Empfangseinheiten erzeugt wird, wobei das Vergleichssignal mindestens einer der beiden Sende-Empfangseinheiten an zumindest die andere der Sende-Empfangseinheiten übertragen wird.

So weit die Begriffe "zweite", "weitere" bzw. "andere" verwendet werden, dient dies insbesondere zur Unterscheidung eines Signals oder einer Komponente in bzw. aus einer ersten solcher Sende-Empfangseinheiten gegenüber mindestens einem entsprechenden Signal oder einer entsprechenden Komponente zumindest einer zweiten solcher Sende-Empfangseinheiten, welche für die Verfahrensdurchführung bzw. als Systembestandteil mit der ersten solcher Sende-Empfangseinheiten zusammenwirkt.

Der Pfad ist insbesondere eine Luftschnittstelle, über die die Signale und Vergleichssignale mittels Antennen gesendet bzw. übertragen und empfangen werden.

Soweit in der Sende-Empfangseinheit Berechnungen, Auswertungen oder sonstige Verfahrensschritte durchgeführt werden, fällt darunter auch eine ggfs. körperlich eigenständige Auswerteeinrichtung, welche an der Sende-Empfangseinheit angeschlossen ist. Beispielsweise kann die Sende-Empfangseinheit so als eine Anordnung aus insbesondere einer oder mehreren Antennen mit einigen wenigen signalerzeugenden oder signalverarbeitenden Komponenten ausgebildet sein, während weitere Komponenten wie die Signalvergleichseinheiten oder eine Auswerteeinrichtung als konstruktiv eigenständige Komponenten an eine solche Anordnung angeschlossen sind. Soweit Komponenten eingesetzt werden können diese, soweit technisch realisierbar, als sogenannte Hardware aus verarbeitenden Komponenten ausgebildet sein und/oder als ganz oder teilweise in einem Prozessor ausgeführte Signal- bzw. Datenverarbeitungsschritte umgesetzt werden.

Vorteilhaft wird so ermöglicht, dass in der ersten Sende-Empfangseinheit eine verbesserte Datenverarbeitung ermöglicht wird, da das in diese erste Sende-Empfangseinheit hinein übertragene Vergleichssignal einen Informationsgehalt bzw. Daten insbesondere über einen Takt- oder Phasen- und Frequenzzustand der anderen Sende-Empfangseinheit umfasst und damit für ein in der Sende-Empfangseinheit bzw. einer dieser angeschlossenen Auswerteeinrichtung eine Kohärenz bzw. ein kohärent erscheinendes Signal rekonstruierbar und auswertbar ist.

Vorteilhaft ist auch, dass durch die Bestimmung des Vergleichssignals ein Signal mit niedrigerer Frequenz vorliegt, welches eine geringere Anzahl von Abtastpunkten zur eindeutigen Darstellung benötigt. Dadurch kann die enthaltene Information leichter an die andere/n Sende-Empfangseinheit/en übertragen werden. Insbesondere für Signale im Frequenzbereich oberhalb 1 GHz ist die geringere Abtastrate für das Vergleichssignal zur technischen Umsetzung sehr vorteilhaft und daher anzustreben. Vorteilhaft ist auch die Reduktion des Speicherbedarfs durch die geringere Datenmenge.

Ein Vergleichs-Vergleichssignal wird aus diesem Vergleichssignal und dem weiteren Vergleichssignal gebildet. Ein solches Vergleichs-Vergleichssignal entspricht insbesondere einem Signal, welches in einer zweiten Vergleichsstufe in einer der beiden Sende-Empfangseinheiten aus zwei solcher Vergleichssignale erzeugt wird, wobei das Vergleichssignal insbesondere aus der Sende-Empfangseinheit selber stammt und das andere zum Vergleich verwendete Vergleichssignal aus einer anderen Sende-Empfangseinheit übertragen wurde. Ein solches Vergleichs-Vergleichssignal ist insbesondere in einem Sekundärradarsystem ein Signal mit Eigenschaften eines Signals, welches ansonsten mit einem Primärradarsystem erstellbar ist.

Das Vergleichs-Vergleichssignal entspricht, indem die beiden Vergleichssignale miteinander verarbeitet - insbesondere konjungiert komplex multipliziert - werden, einem mit kohärentem Radarsystem erzeugten Vergleichssignal.

Insbesondere kann somit ein Verfahren in einem Radarsystem durchgeführt werden, bei dem ein Vergleichs-Vergleichssignal dadurch gebildet wird, dass in einer ersten nicht-kohärenten Sende-Empfangseinheit ein Vergleichssignal aus einem von dieser selber erzeugten ersten Signal und aus einem in einer weiteren, insbesondere zweiten nichtkohärenten Sende-Empfangseinheit erzeugten und über einen Pfad gesendeten, insbesondere ausgestrahlten ersten Signal gebildet wird und nachfolgend das Vergleichs-Vergleichssignal aus diesem Vergleichssignal und einem weiteren Vergleichssignal gebildet wird, wobei das weitere Vergleichssignal auf entsprechende Art und Weise in der weiteren Sende-Empfangseinheit aus einem solchen in dieser erzeugten ersten Signal und einem solchen in dieser über den Pfad empfangenen ersten Signal aus der ersten Sende-Empfangseinheit gebildet und zu der ersten Sende-Empfangseinheit übertragen, insbesondere kommuniziert wird.

Insbesondere kann somit ein Verfahren in einem Radarsystem durchgeführt werden, bei dem ein Vergleichs-Vergleichssignal dadurch gebildet wird, dass in einer ersten nichtkohärenten Sende-Empfangseinheit ein erstes Signal erzeugt wird und ein Vergleichssignal aus dem ersten Signal und aus einem von einer weiteren, insbesondere zweiten nicht-kohärenten Sende-Empfangseinheit empfangenen ersten Signal gebildet wird, wobei das erste Signal von der weiteren Sende-Empfangseinheit erzeugt und zu der ersten Sende-Empfangseinheit über einen Pfad gesendet, insbesondere ausgestrahlt wird, ein weiteres Vergleichssignal auf entsprechende Art und Weise in der weiteren Sende-Empfangseinheit aus einem solchen in dieser erzeugten ersten Signal und einem solchen in dieser über den Pfad empfangenen ersten Signal der ersten Sende-Empfangseinheit gebildet und zu der ersten Sende-Empfangseinheit übertragen, insbesondere kommuniziert wird und das Vergleichs- Vergleichssignal aus diesem Vergleichssignal und dem weiteren Vergleichssignal gebildet wird.

Insbesondere kann somit ein Verfahren in einem verteilten Radarsystem mit zumindest zwei räumlich beabstandeten Sende-Empfangseinheiten als Radareinheiten durchgeführt werden, bei dem die Sende-Empfangseinheiten jeweils einen Signalgenerator aufweisen, wobei die Signalgeneratoren Signale generieren, die wechselseitig zwischen den Radareinheiten ausgetauscht werden und wobei die Sende-Empfangseinheiten über Kommunikationsmittel verfügen, wobei mit den Kommunikationsmitteln zumindest eines der Vergleichssignale einer Sende-Empfangseinheit, in der es gebildet wurde, zu zumindest einer anderen Sende-Empfangseinheit übertragen wird und wobei zumindest eine der Sende-Empfangseinheiten eine zweite bzw. weitere Vergleichseinheit aufweist und dieser zweiten Vergleichseinheit die ermittelten Vergleichssignale der beiden ersten Vergleichseinheiten der beiden Sende-Empfangseinheiten zugeführt werden und in dieser zweiten Vergleichseinheit zumindest ein Mischvorgang oder eine Korrelation durchgeführt wird und so ein Vergleichs-Vergleichssignal derart gebildet wird, dass ein Merkmal dieses Vergleichs-Vergleichssignals proportional zur Signallaufzeit, die ein Signal für den Weg zwischen den Sende-Empfangseinheiten benötigt, ist, wobei das Merkmal die Phase oder der Phasen- Verl auf oder die Frequenz des Vergleichssignal oder die Position eines impulsförmiges Signalmaximums im Vergleichssignal ist.

Vorteilhaft ist diese Verfahrensweise bzw. eine diese durchführende Anordnung für hochgenaue Entfernungsmessung zwischen Sekundärradareinheiten. Vorteilhaft ist diese Verfahrensweise bzw. eine diese durchführende Anordnung gemäß einer weiteren Ausgestaltung, um für Radar allgemein eine größere Apertur und eine höhere erreichbare Auflösung zu ermöglichen. Für größere Aperturen erfolgt vorteilhaft eine technische einfachere Realisierung eines Arrays, da insbesondere eine bisher notwendige komplizierte Verteilung hochfrequenter Signale nicht mehr erforderlich ist.

Eine Ausgestaltung besteht darin, dass zumindest eines von dem Vergleichssignal, dem weiteren Vergleichssignal oder dem Vergleichs-Vergleichssignal durch zumindest eines von Mischen oder Korrelation gebildet wird.

Bevorzugt wird in einer weiteren Vergleichseinheit bzw. dem zweiten Vergleichsvorgang zumindest ein Mischvorgang durchgeführt und so ein Vergleichs-Vergleichssignal gebildet und von diesem Vergleichs-Vergleichssignal mit Hilfe einer Fourier-Transformation ein Signal ermittelt oder berechnet. Aus diesem ermittelten oder berechneten Signal wird eine Entfernung und/oder eine räumliche Position und/oder eine Geschwindigkeit eines Objektes oder einer zweiten als Sende-Empfangseinheit verwendeten Radareinheit bestimmt.

Bevorzugt wird in einer weiteren Vergleichseinheit bzw. dem zweiten Vergleichsvorgang zumindest ein Vergleichs-Vergleichssignal gebildet und von diesem Vergleichs-Vergleichssignal mit Hilfe einer Fourier-Transformation zumindest eine Phase bzw. ein Phasenwert und/oder zumindest ein Frequenzwert ermittelt. Insbesondere wird mit zumindest einem dieser Phasen- oder Frequenzwerte ein Entfernungs- und/oder Geschwindigkeitswert ermittelt, insbesondere berechnet.

Anstelle eines Mischens oder zusätzlich dazu ist eine Korrelation verwendbar.

Eine Ausgestaltung ist, dass mindestens ein solches weiteres Vergleichssignal zwischen den Sende-Empfangseinheiten als zumindest eines von Daten, einem Daten enthaltenden Signal oder einem Daten rekonstruierbar enthaltenden Signal übertragen wird.

Dies stellt sicher, dass beim Empfänger der Datengehalt des Vergleichssignals unverfälscht empfangen wird oder rekonstruierbar ist. Beim Vergleich der Vergleichssignale werden somit Verfälschungen oder Störeffekte vermieden, welche durch eine Signalverfälschung bei der Übertragung der im Signal enthaltenen Daten entstehen könnten. Übertragen bzw. kommuniziert werden somit insbesondere Daten als solche, insbesondere digitale Daten, wobei solche Daten sowohl über ein Aussenden mittels einer Antenne in eine Umgebung der Antenne als auch leitungsgebunden übertragbar sind. Vorteilhaft ist auch, dass hier insbesondere nur notwendige Teile des Signals übertragen werden müssen bzw. das Signal in komprimierter/vorverarbeiteter Form übertragen werden kann und somit die Anforderungen an die Datenrate der Kommunikation geringer sind.

Eine Ausgestaltung besteht darin, dass zumindest eines der ersten Signale als ein Sendesignal über den als Luftschnittstelle ausgebildeten Pfad gesendet wird. Das Aussenden der ersten Signale kann somit in üblicher Weise dadurch erfolgen, dass ein Radarsignal als analoges Signal mit einer Sendeantenne in die Umgebung der Sendeantenne aus- bzw. abgestrahlt wird.

Eine Ausgestaltung besteht darin, dass Zeitpunkte zum Senden der ersten Signale derart koordiniert werden, dass sich die ersten Signale zeitlich zumindest teilweise überdecken. Dadurch ergibt sich eine insbesondere Vorsynchronisation der die ersten Signale aussendenden Sende-Empfangseinheiten so, dass sich die Signale überlappen, insbesondere um mindestens ein Viertel von deren Signallänge oder Modulationsdauer, bevorzugt um mehr als eine Hälfte von deren Signallänge oder Modulationsdauer. Vorteilhaft ist bei einer solchen Umsetzung eine geringere Bandbreite erforderlich, welche bei der Signalerzeugung und bei der Dimensionierung der erforderlichen Komponenten berücksichtigt werden muss. Zudem ist die Reichweite verbessert, da über einen längeren Zeitraum beide Signale vorhanden sind.

Eine Ausgestaltung besteht darin, dass aus dem Vergleichs-Vergleichssignal der ersten Sende-Empfangseinheit und/oder dem Vergleichs-Vergleichssignal oder zweiten Sende-Empfangseinheit eine Signallaufzeit, die ein solches erstes Signal für den Weg zwischen den Sende-Empfangseinheiten benötigt, ermittelt wird, indem mindestens eines von einer Phase oder einem Phasenwert, einer Frequenz, einem Amplituden-Verlauf oder einem Phasen- Verlauf des Vergleichs-Vergleichssignal analysiert wird.

Aus der Signallaufzeit ist insbesondere eine Entfernung zwischen den beteiligten Sende-Empfangseinheiten bestimmbar. Als Verfahren zu Bestimmung der Signallaufzeit sind beispielsweise Frequenzen mit Spektralanalyse, insbesondere Fouriertransformation, Phasenwerte analytisch oder mit Fouriertransformation, ein Amplituden-Verlauf aus Amplituden-Zeitdiagramm und/oder ein Phasen-Verlauf aus einem Phase-zu-Zeit-Diagramm ermittelbar. Insbesondere wird so eine Phase, eine Frequenz, ein Amplituden-Verlauf, ein Phasen-Verlauf des Vergleichs-Vergleichssignals oder eine Position eines impulsförmigen Signalmaximums im Vergleichs-Vergleichssignal durch die Signallaufzeit deterministisch bestimmt.

Bei dem zweiten Vergleichsvorgang wird insbesondere ein Korrelationsvorgang durchgeführt und so ein Vergleichs-Vergleichssignal gebildet und in diesem Vergleichs-Vergleichssignal zumindest ein impulsförmiges Signalmaximum bzw. ein Impuls detektiert. Nachfolgend wird die zeitliche Position des Impulses im Vergleichssignal oder ein Phasenwert oder eine Frequenz von zumindest einem detektierten Impuls bestimmt und zumindest einer dieser zuvor bestimmten Positions-, Phasen- oder Frequenzwerte zur Berechnung eines Entfernungs- oder eines Geschwindigkeitswerts verwendet.

Eine Ausgestaltung besteht darin, dass zumindest eines der ersten Signale als ein FMCW- oder OFDM-moduliertes Signal erzeugt und gesendet wird. FMCWmodulierte Signale ermöglichen eine besonders einfache Auswertung des Vergleichs-Vergleichssignals über eine Fouriertransformation. Zudem eignen sie sich prinzipbedingt besonders gut zur Entfernungsmessung, da ihr Zeit-Frequenzzusammenhang besonders gut bekannt ist. Außerdem lassen sich FMCW-Signale mit geringem technischem Aufwand erzeugen. OFDM-Signale sind besonders vorteilhaft für Kommunikationssysteme. Sie ermöglichen damit eine vorteilhafte Integration der Verfahrensweise in Kommunikationssysteme.

Eine Ausgestaltung besteht darin, dass zumindest eines der ersten Signale als ein Multirampen-Signal erzeugt und gesendet wird. Vorteilhaft ergeben sich dadurch eine gute Geschwindigkeitsbestimmung und Zieltrennung.

Eine Ausgestaltung besteht darin, dass mehrere Vergleichs-Vergleichssignale, die mit zumindest zwei Sende-Empfangseinheiten, von denen sich zumindest eine der Sende-Empfangseinheiten bewegt, zeitlich nacheinander gemessen werden und mit einem synthetische Apertur-Verfahren zumindest eines von einer Entfernung, einer Position, einer Geschwindigkeit oder das Vorhandensein einer der Sende-Empfangseinheiten oder das Vorhandensein einer solchen Sende-Empfangseinheiten oder zumindest eines von einer Entfernung, einer Position, einer Geschwindigkeit relativ zu einem Objekt oder das Vorhandensein eines Objekts bestimmt wird.

Dazu wird beispielsweise die Entfernung über den direkten Weg zwischen den Sende-Empfangseinheiten gemessen, wie bei einem Sekundärradar, und so die Entfernung der beiden Einheiten zueinander bestimmt. Auch kann so beispielsweise die Entfernung zwischen den Sende-Empfangseinheiten über eine Reflektion an einem Objekt als einem passiven Ziel bestimmt bzw. gemessen werden. Mit der bekannten Position der Einheiten kann dann die Entfernung und Position auch des Objekts bestimmt werden.

Erfindungsgemäß vorgeschlagen wird ein Radarsystem, bei dem

- zumindest eine erste nicht-kohärente Sende-Empfangseinheit ausgebildet ist, ein erstes Signal zu erzeugen und über einen Pfad zu senden, insbesondere auszustrahlen,
- zumindest eine weitere, insbesondere zweite nicht-kohärenten Sende-Empfangseinheit ausgebildet ist, ein erstes Signal zu erzeugen und über den Pfad zu senden, insbesondere auszustrahlen,
- die erste Sende-Empfangseinheit ausgebildet ist, ein Vergleichssignal aus deren erstem Signal und aus einem solchen von der weiteren Sende-Empfangseinheit über den Pfad empfangenen ersten Signal zu bilden,
- die weitere Sende-Empfangseinheit ausgebildet ist, ein weiteres Vergleichssignal aus deren erstem Signal und aus einem solchen von der ersten Sende-Empfangseinheit über den Pfad empfangenen ersten Signal zu bilden, und
- das weitere Vergleichssignal von der weiteren Sende-Empfangseinheit zu der ersten Sende-Empfangseinheit übertragen wird, insbesondere kommuniziert wird. Weitere Merkmale ergeben sich aus Anspruch 13.

Bei dem Radarsystem wird ein Vergleichs- Vergleichssignal aus diesem Vergleichssignal und dem weiteren Vergleichssignal gebildet.

Eine Ausgestaltung besteht in dem Radarsystem mit drei oder mehr räumlich beabstandeten Sende-Empfangseinheiten, bei dem aus zwei oder mehr Vergleichs-Vergleichssignalen, die mit mehr als zwei Paaren aus jeweils zwei der räumlich beabstandeten der Sende-Empfangseinheiten gemessen werden, eine Entfernung, eine Position, eine Geschwindigkeit oder das Vorhandensein einer der Sende-Empfangseinheiten oder das Vorhandensein einer solchen Sende-Empfangseinheiten oder zumindest eines von einer Entfernung, einer Position, einer Geschwindigkeit relativ zu einem Objekt oder das Vorhandensein eines Objekts bestimmt wird.

Durch die Anordnung werden somit Apertur-Matrizen ausgebildet, deren Auswertung die Ermittlung des Eintreffwinkels ermöglicht. Alternativ kann mit nur einer Sende-Empfangseinheit eine Apertur abgefahren werden und dann mittels synthetischer Apertur-Verfahrensweise der Eintreffwinkel bestimmt werden.

Eine Ausgestaltung ist das Radarsystem, bei dem die erste Sende-Empfangseinheit und zumindest eine solche weitere Sende-Empfangseinheit und/oder eine Auswerteeinrichtung ausgebildet sind zum Durchführen eines solchen Verfahrens. Eine solche Auswerteeinrichtung ist insbesondere Bestandteil einer oder beider Sende-Empfangseinheiten oder an einer oder mehreren solcher Sende-Empfangseinheiten angeschlossen.

Erfindungsgemäß vorgeschlagen wird eine Vorrichtung eines Radarsystems, insbesondere zum Durchführen eines solchen Verfahrens und/oder in einem solchen Radarsystem, wobei die Vorrichtung ausgebildet ist als eine erste nicht-kohärente Sende-Empfangseinheit - insbesondere erste nicht-kohärente Sende-Empfangseinheit - und einen Signalgenerator und zumindest eine Antenne aufweist, die ausgebildet sind, ein erstes Signal zu erzeugen und über einen Pfad zu senden, insbesondere auszustrahlen,

- eine Anordnung aufweist, die ausgebildet ist, ein Vergleichssignal aus dem ersten Signal und aus einem derartigen von einer weiteren Sende-Empfangseinheit über den Pfad empfangenen ersten Signal zu bilden
- und zumindest eines von einer Schnittstelle, die ausgebildet ist, das Vergleichssignal zu der weiteren Sende-Empfangseinheit zu übertragen, insbesondere zu kommunizieren oder eine Schnittstelle aufweist, die ausgebildet ist, ein derartiges von der weiteren Sende-Empfangseinheit erzeugtes weiteres Vergleichssignal mittels Übertragen, insbesondere Kommunizieren, in der ersten Sende-Empfangseinheit zu erhalten. Weitere Merkmale ergeben sich aus Anspruch 16.

Die Vorrichtung umfasst eine weitere Vergleichseinheit, die ein Vergleichs-Vergleichssignal bildet aus dem in derselben Sende-Empfangseinheit gebildeten Vergleichssignal und dem zu dieser Sende-Empfangseinheit übertragenen Vergleichssignal.

Die Anordnung, die das Vergleichssignal ausgibt und die Vergleichseinheit sind insbesondere als Mischer oder Korrelator ausgebildet. So wird damit eine Verarbeitung, insbesondere ein Korrelationsvorgang durchgeführt. Aus dem letztendlich gebildeten Vergleichs-Vergleichssignal werden insbesondere die Entfernung oder die Position oder die Geschwindigkeit eines Objektes oder einer solchen dieser Sende-Empfangseinheit ermittelt.

Eine Ausgestaltung besteht in einer Vorrichtung, bei der die zumindest eine Schnittstelle eine Datenschnittstelle ist. Dies ermöglicht, das erste Vergleichssignal als Daten - insbesondere als digitale Daten enthaltendes Datensignal - zwischen den Sende-Empfangseinheiten zu übertragen.

Eine Ausgestaltung besteht in einer Vorrichtung, bei der zwischen der Anordnung, die das Vergleichssignal ausgibt, und der weiteren Vergleicheinheit, die das Vergleichs-Vergleichssignal bildet, ein Filter angeordnet ist, wobei der Filter an die Vergleicheinheit das Vergleichssignal anlegt, wobei der Filter ein weiteres in der dem Filter vorgeschalteten Anordnung gebildetes Vergleichssignal nicht anlegt und das in der vorgeschalteten Anordnung gebildete Vergleichssignal unterdrückt oder an einem Anschluss bereitstellt.

So kann das weitere Vergleichssignal, das durch eine Rückreflexion von der Sendeantenne der Sende-Empfangseinheit zu deren Empfangsantenne entsteht, entweder nur von der weiteren Vergleicheinheit ferngehalten oder aber an einem eigenen Ausgang bzw. Anschluss für eine weitere Verarbeitung bereit gestellt werden. Eine solche Anordnung ist insbesondere vorteilhaft bei Verwendung von CW-Signalen und berücksichtigt einen Passivradargehalt, der durch Rück- bzw. Querreflektion entsteht.

Eine Ausgestaltung besteht in einer Vorrichtung, die eine Vielzahl von zueinander räumlich beabstandeten Empfangsantennen aufweist, welcher jeweils eine Anordnung zugeordnet ist, die ausgebildet ist, jeweils ein Vergleichssignal aus dem erstem Signal und aus einem derartigen von einer solchen weiteren Sende-Empfangseinheit über den Pfad empfangenen ersten Signal zu bilden.

Ausgebildet wird so ein kohärenter Mehrkanalempfänger, welcher eine räumliche Apertur nachbildet, die mit einer Messung bzw. Aussendung der ersten Signale eine Vielzahl von Vergleichs-Vergleichssignalen erzeugt und entsprechende Auswertungen von z.B. auch Winkellagen der Vorrichtungen zueinander und/oder im Raum ermöglicht.

Bevorzugt wird somit insbesondere ein Verfahren zur Erzeugung kohärenter Radarsignale mit mehreren inkohärent zueinander arbeitenden Sende-Empfangseinheiten und Anordnungen zur Durchführung des Verfahrens sowie neuartige verteilte Radarsysteme zur Ortung- und Bildgebung unter Verwendung des Verfahrens und der Anordnungen. Die Kohärenz entsteht dabei insbesondere über Postprocessing (deutsch: Nachverarbeitung) der verschiedenen Signale.

Die Aufgabenstellung wird insbesondere auch dadurch gelöst, dass Messsignale in einem verteilten Radarsystem, welches aus zumindest zwei Radareinheiten, deren Quellen nicht kohärent zueinander sind, derart gebildet werden, dass die Phase der so gebildeten Signale in einem proportionalem Zusammenhang zu der Signallaufzeit der zwischen den Radareinheiten ausgetauschten Messsignale ist, wie dies sonst nur bei kohärenten Radareinheiten der Fall ist. Durch die bevorzugten Verfahren und Anordnungen werden neuartige leistungsfähige verteilte Radarsysteme mit mehreren nicht-kohärenten Sende-Empfangseinheiten ermöglicht, die sowohl zur Ortung und Abbildung von passiv reflektierenden Objekten als auch zur Ortung anderer nicht-kohärenter Sende-Empfangseinheiten geeignet sind. In diesen verteilten Radarsystemen mit mehreren nicht-kohärenten Sende-Empfangseinheiten sind insbesondere auch SA-Verfahren anwendbar.

Dies stellt eine entscheidende Verbesserung dar, da, wie ausgeführt wurde, SA-Verfahren eigentlich kohärente Sende-Empfangseinheiten benötigen. Durch die bevorzugten Verfahren wird es insbesondere möglich, große synthetische Aperturen mit mehreren räumlich verteilten Sende-Empfangseinheiten zu erzeugen, ohne dass die mehreren Einheiten wie sonst üblich mit einem gemeinsamen kohärenten Hochfrequenz-Bezugssignal versorgt werden müssen. Durch den Wegfall der Hochfrequenzleitungen zur Verteilung des Hochfrequenz-Bezugssignals verringern sich die Kosten und die Komplexität derartiger Anordnungen deutlich.

Im Bereich Sekundärradar wird durch die Anordnung zusätzlich die erreichbare Genauigkeit von Positions-, Bewegungs- und Geschwindigkeitsmessungen erhöht, da nun kohärente Signale vorliegen.

Ausführungsbeispiele werden nachfolgend anhand der Zeichnung näher erläutert. Dabei werden in verschiedenen Figuren für gleiche oder gleich wirkende Verfahrensschritte, Signale, Komponenten und dergleichen gleiche Bezugszeichen verwendet, so dass diesbezüglich auch auf die Ausführungen zu anderen der Figuren verwiesen wird. Insbesondere werden bevorzugt Unterschiede gegenüber den Ausführungen zu anderen, insbesondere vorstehenden der Figuren beschrieben. Es zeigen:

Fig. 1    schematisch einen Aufbau zweier nicht-kohärenter Sende-Empfangseinheiten und deren Interaktionen und Signalverarbeitungen;

Fig. 2    schematisch einen Aufbau zweier nicht-kohärenter Sende-Empfangseinheiten und deren Interaktionen und Signalverarbeitungen bei Verwendung von CW-Radarsignalen (CW: Continuous Wave / kontinuierliche Welle);

Fig. 3    eine Anordnung mehrerer derartiger nicht-kohärenter Sende-Empfangseinheiten zu einer MIMO-Anordnung zur Messung passiv reflektierender Objekte zur Ortung eines Objektes oder zur Abbildung einer Objektszene;

Fig. 4      eine Anordnung mehrerer derartiger nicht-kohärenter Sende-Empfangseinheiten zu einer MIMO-Anordnung zur Messung zwischen aktiv reflektierenden nichtkohärenten Sende-Empfangseinheiten zur Ortung zumindest einer weiteren nichtkohärenten Sende-Empfangseinheit;

Fig. 5      eine Aufnahme-Situation für eine Sekundärradar-Apertur-Synthese;

Fig. 6      eine Aufnahme-Situation für eine inverse Sekundärradar-Apertur-Synthese;

Fig. 7      eine Anordnung zur Messung eines Winkels zwischen zwei nicht-kohärenten Sende-Empfangseinheiten relativ zur zweiten Antennenebene;

Fig. 8      eine Anordnung zur Messung eines Winkels zwischen zwei nicht-kohärenten Sende-Empfangseinheiten relativ zur ersten Antennenebene;

Fig. 9      eine Anordnung zur Messung eines Winkels zwischen einem Objekt und einer ersten von zwei nicht-kohärenten Sende-Empfangseinheiten oder zur Ortung eines Objektes oder zur Abbildung einer Objektszene; und

Fig. 10     ein beispielhaft verwendetes FMCW-Multirampen-Signal.

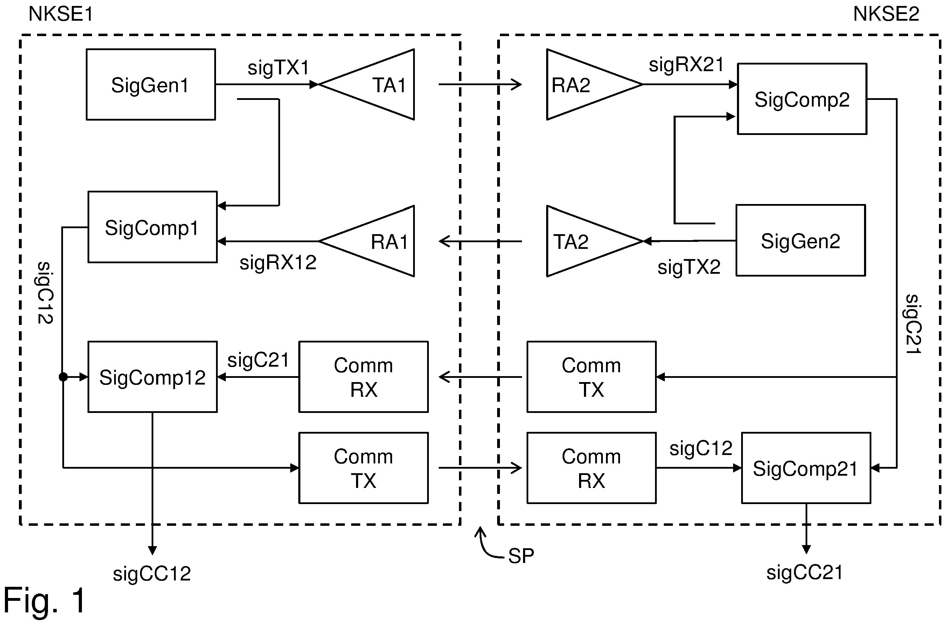

Fig. 1 zeigt schematisch einen Aufbau zweier nicht-kohärenter Sende-Empfangseinheiten NKSE1, NKSE2 und deren bevorzugter Interaktionen und Signalverarbeitungen als Komponenten eines verteilten Radarsystems, um einen beispielhaften, bevorzugten Grundaufbau darzustellen. Nachfolgend wird unter Sende-Empfangseinheit NKSE1, NKSE2 stets eine nicht-kohärente Sende-Empfangseinheit NKSE1, NKSE2 verstanden.

Die beiden Sende-Empfangseinheiten NKSE1, NKSE2 sind insbesondere räumlich getrennt angeordnet. Die Sende-Empfangseinheiten NKSE1, NKSE2 tauschen untereinander Signale einschließlich auch Signale mit darin enthaltenen Informationen bzw. Daten über einen Pfad SP aus, der insbesondere als Luftschnittstelle ausgebildet ist. In einer der Sende-Empfangseinheiten NKSE1, NKSE2 werden neben auf direktem Weg von der anderen Sende-Empfangseinheit NKSE2, NKSE1 übertragenen Signalen auch indirekt übertragene Signale empfangen, welche einer Reflektion an einem Objekt längs des Pfads SP unterlagen.

Für eine Anwendung eines bevorzugten Verfahrens besteht eine bevorzugte Anordnung aus mindestens zwei gleichartig, aufgebauten Sende-Empfangseinheiten NKSE1, NKSE2.

In einer ersten der zumindest zwei Sende-Empfangseinheiten NKSE1, NKSE2 erzeugt ein Signalgenerator SigGen1 ein erstes Signal sigTX1. Über einen Signalteiler wird dieses erste Signal sigTX1 in zwei Pfade aufgeteilt. Über einen der Pfade wird das erste Signal sigTX1 über eine als Sendeantenne ausgestaltete Antenne TA1 aus der ersten Sende-Empfangseinheit NKSE1 abgestrahlt. Über den anderen Pfad wird das erste Signal sigTX1 einer Signalvergleichseinheit SigComp1 zugeführt. Der Signalgenerator verwendet insbesondere eine Taktquelle oder einen Oszillator bzw. ein Oszillatorsignal.

Die zweite oder eine noch weitere der zumindest zwei Sende-Empfangseinheiten NSKE2 empfängt das von der ersten Sende-Empfangseinheit NSKE1 abgestrahlte Signal über eine als Empfangsantenne ausgestaltete Antenne RA2 und führt dieses als ein erstes Empfangssignal sigRX21 einer Signalvergleichseinheit SigComp2 zu. In dieser zweiten bzw. weiteren Sende-Empfangseinheit NSKE2 erzeugt ein Signalgenerator SigGen2 ein weiteres erstes Signal sigTX2. Dieses weitere erste Signal sigTX2 wird ebenfalls aufgeteilt, insbesondere über einen Signalteiler aufgeteilt, und in einem Pfad der Signalvergleichseinheit SigComp2 zugeführt. Über einen zweiten Pfad wird das weitere erste Signal sigTX2 über eine als Sendeantenne ausgestaltete Antenne TA2 abgestrahlt.

Die erste Sende-Empfangseinheit NSKE1 empfängt das von der zweiten oder weiteren Sende-Empfangseinheit NSKE2 abgestrahlte Signal über eine als Empfangsantenne ausgestaltete Antenne RA1 und führt dieses als ein erstes Empfangssignal sigRX12 der Signalvergleichseinheit SigComp1 der ersten Sende-Empfangseinheit NSKE1 zu.

Gemäß einer Variante kann das jeweils erste Signal sigTX1, sigTX2 z.B. über einen Richtkoppler aus dem Pfad zwischen dem Signalgenerator SigGen1, SigGen2 und der Antenne TA1, TA2 ausgekoppelt werden. Auch ist es möglich, das erste Signal sigTX1, sigTX2 über die als Sendeantenne geschaltete Antenne TA1, TA2 auszusenden und über die weitere als Empfangsantenne geschaltete Antenne RA1, RA2 zu empfangen und der Signalvergleichseinheit SigCompl, SigComp2 anzulegen. Weiterhin ist es möglich, das erste Signal sigTX1, sigTX2 über die als Sendeantenne geschaltete Antenne TA1, TA2 auszusenden und über dieselbe zusätzlich als Empfangsantenne geschaltete Antenne auf dem gleichen Pfad zu empfangen, auszukoppeln und der Signalvergleichseinheit SigComp1, SigComp2 anzulegen.

Vorzugsweise werden als solche erste Signale sigTX1 bzw. sigTX2 frequenzmodulierte Signale verwendet. Insbesondere sind linear frequenzmodulierte Signale (FMCW: frequency modulated continous wave), stufenweise frequenzmodulierte Signale (FSCW: frequency stepped continuous wave) oder Frequenz-umgetastete Signale (FSK: frequency shift keying) oder Signale mit Frequenzsprüngen (FHOP: frequency hop) oder Signale im orthogonalen Frequenzmultiplexverfahren (OFDM: Orthogonal frequency-division multiplexing) bevorzugte Signal- und/oder Modulationsformen. Es sind aber auch alle andern Signalformen mit sogenannten guten Korrelationseigenschaften, wie sie in der Radartechnik allgemein bekannt sind, wie z.B. Rauschsignale, pseudozufällige Pulsfolgen mit Amplituden oder Phasenmodulation, wie z.B. Barker-, M-, Gold- oder Kasami-Sequenzen, oder Polyphasencodes einsetzbar. Insbesondere vorteilhaft ist für den gleichzeitigen Betrieb mehrerer Sende-Empfangseinheiten NKSE1, NSKE2, wenn zum Multiplexing mehrerer Sende-Empfangseinheiten NKSE-N mit einer Anzahl N der Sende-Empfangseinheiten NKSE-N mit N > 1 Signalformen gewählt werden, mit denen ein Satz von N orthogonal modulierten Signalen sigTX1, sigTX2, ... sigTXN gebildet werden kann. So kann jedes in einer der Sende-Empfangseinheiten NKSE1, NSKE2, ... NSKE-N derart gebildete erste Signal sigTX1, sigTX2, ... auch bei gleichzeitigem Empfang jeweils von in einer der anderen der Sende-Empfangseinheiten NKSE1, NSKE2, ... NSKE-N so gebildeten ersten empfangenen Signalen getrennt werden. Insbesondere kann die Anzahl N somit auch größer als zwei sein.

Die Signalvergleichseinheiten SigCompl, SigComp2 vergleichen das an diesen jeweils angelegte erste Signal sigTX1 bzw. sigTX2 und erste Empfangssignal sigRX12 bzw. sigRX21 und bilden jeweils ein insbesondere erstes Vergleichssignal sigC12 bzw. sigC21. Insbesondere sind von diesen Vergleichssignalen sigC12, C21 deren Phasen- und/oder Zeitverlauf durch die Zeit-, Frequenz- und/oder Phasendifferenz der entsprechenden ersten Signale sigTX1 bzw. sigTX2 und entsprechenden ersten Empfangssignale sigRX12 bzw. sigRX21 vorgegeben und werden optional ermittelt. Insbesondere ist von dem Vergleichssignal sigC12 der ersten Sende-Empfangseinheit NKSE1 dessen Phasen- und/oder Zeitverlauf durch die Zeit-, Frequenz- und/oder Phasendifferenz des ersten Signals sigTX1 und des ersten Empfangssignals sigRX12 in der ersten Sende-Empfangseinheit NKSE1 bestimmt und ermittelbar, und von dem Vergleichssignal sigC21 der zweiten oder weiteren Sende-Empfangseinheit NKSE2 ist dessen Phasen- und/oder Zeitverlauf durch die Zeit-, Frequenz- und/oder Phasendifferenz des ersten Signals sigTX2 und des ersten Empfangssignals sigRX21 in der zweiten Sende-Empfangseinheit NKSE2 bestimmt und ermittelbar.

Solche Signalvergleichseinheiten SigComp1 bzw. SigComp2 umfassen vorzugsweise einen sogenannten Mischer bei Verwendung von frequenzmodulierten Signalen oder einen Korrelator bei Verwendung von phasen- und amplitudenmodulierten oder pulsförmigen Signalen zur Bildung des Vergleichssignals sigC12 bzw. sigC21. Im Mischer werden die jeweils anliegenden beiden Signale ganz oder abschnittsweise multipliziert beziehungsweise im Korrelator ganz oder abschnittsweise korreliert. Auch der kombinierte Einsatz von Mischer und Korrelator ist umsetzbar.

Das Vergleichssignal sigC21 der zweiten bzw. weiteren Sende-Empfangseinheit NKSE2 wird mit einer Datenschnittstelle CommTX, CommRX der zweiten Sende-Empfangseinheit NKSE2 zu einer Datenschnittstelle CommTX, CommRX der ersten Sende-Empfangseinheit NKSE1 übertragen und in der ersten Sende-Empfangseinheit NKSE1 einer weiteren Signalvergleichseinheit SigComp12 zugeführt. Das Vergleichssignal sigC21 wird dabei vorzugsweise digitalisiert und dann mit den als digitale Schnittstellen ausgestalteten übertragen. Die Schnittstelle zwischen den Datenschnittstellen CommTX, CommRX kann drahtlos als Funkschnittstelle, insbesondere über den Pfad SP zwischen diesen, oder leitungsgebunden bzw. drahtgebunden ausgeführt sein. Der weiteren Signalvergleichseinheit SigComp12 in der ersten Sende-Empfangseinheit NKSE1 wird als weiteres Signal das in der ersten Sende-Empfangseinheit NKSE1 gebildete Vergleichssignal sigC12 zugeführt.

Die weitere Signalvergleichseinheit SigComp12 vergleicht die an dieser anliegenden Vergleichssignale sigC12 und sigC21 und bildet ein Vergleichs-Vergleichssignal sigCC12. Insbesondere wird dessen Phase oder dessen Amplituden- und/oder Phasen-Verlauf durch die Signallaufzeit, die ein Signal für den Weg von der ersten Sende-Empfangseinheit NKSE1 zur zweiten und/oder noch weiteren Sende-Empfangseinheit NKSE2 bzw. von der zweiten und/oder noch weiteren Sende-Empfangseinheit NKSE2 zur ersten Sende-Empfangseinheit NKSE1 benötigt, bestimmt bzw. wird optional ermittelt. Die weitere Signalvergleichseinheit SigComp12 umfasst hierzu vorzugsweise einen Mischer und/oder einen Korrelator zur Bildung des Vergleichs-Vergleichssignals sigCC12. Das Vergleichssignal sigC12 wird der weiteren Signalvergleichseinheit SigComp 12 vorzugsweise digitalisiert zugeführt und der Signalvergleich vorzugsweise mittels digitaler Signalverarbeitung durchgeführt.

Das Vergleichs-Vergleichssignal sigCC21 wird somit insbesondere dadurch gebildet, dass in einem ersten Schritt in der ersten Sende-Empfangseinheit NKSE1 ein Vergleichssignal sigC12 aus einem von dieser selber erzeugten ersten Signal sigTX1 und aus einem in der zweiten oder einer weiteren Sende-Empfangseinheit NKSE2 erzeugten und über den Pfad SP übertragenen ersten Signal sigTX2 gebildet wird und nachfolgend in einem zweiten Schritt das Vergleichs-Vergleichssignal sigCC21 aus diesem ersten Vergleichssignal sigC21 und einem weiteren ersten Vergleichssignal sigC21 gebildet wird, wobei zuvor das weitere erste Vergleichssignal sigC21 auf entsprechende Art und Weise in der anderen Sende-Empfangseinheit NKSE2 aus deren ersten Signal sigTX2 und dem in dieser über den Pfad SP empfangenen ersten Signal sigTX1 aus der ersten Sende-Empfangseinheit NKSE1 gebildet und als insbesondere Datensignal übertragen wird.

Ob das von der Antenne TA1 der einen Sende-Empfangseinheiten NKSE1 abgestrahlte Signal sigTX1 auf direktem Weg zur als Empfangsantenne geschalteten Antenne RA2 oder über ein Objekt reflektiert zur als Empfangsantenne geschalteten Antenne RA2 der anderen Sende-Empfangseinheit NKSE2 gelangt, ist insbesondere zunächst unerheblich. Der Übertragungsweg von der einen Antenne TA1 zur anderen Antenne RA2 kann allgemein, wie in der Systemtheorie üblich durch eine Kanal-Übertragungsfunktion bzw. die sogenannte Kanal-Impulsantwort beschrieben werden. Bei dem hier beschriebenen Verfahren wird insbesondere ausgenutzt, dass das von der zum Senden verwendeten Antenne TA2 abgestrahlte Signal sigTX2 über denselben Kanal zur Antenne RA1 übertragen wird, wie zuvor in umgekehrter Richtung von der zum Senden verwendeten Antenne TA1 der einen Sende-Empfangseinheit NKSE1 zur der zum Empfangen verwendeten Antenne RA2 der anderen Sende-Empfangseinheit NKSE2. Der allgemein bekannte Fachbegriff für die insbesondere geforderte Gleichheit der Kanal-Übertragungsfunktionen in beiden Übertragungsrichtungen ist die sogenannte Kanalreziprozität. Dem Fachmann ist bekannt, dass man von Kanalreziprozität ausgehen kann, wenn die Antennen TA1 und RA1 sich am selben Ort befinden bzw. in der einen Sende-Empfangseinheit NKSE1 nur eine Antenne zum Senden und Empfangen benutzt wird und sich zudem die Antennen TA2 und RA2 der anderen Sende-Empfangseinheit NKSE2 am selben Ort befinden bzw. auch in der der anderen Sende-Empfangseinheit NKSE2 nur eine Antenne zum Senden und Empfangen benutzt wird. Von einer insbesondere ausreichenden annähernden Kanalreziprozität kann auch noch ausgegangen werden, wenn sowohl die Antennen TA1, RA1 der einen Sende-Empfangseinheit NKSE1 als auch die Antennen TA2, RA2 der zumindest einen anderen Sende-Empfangseinheit NKSE2 sehr dicht benachbart angeordnet sind. Unter sehr dicht benachbart wird verstanden, dass das räumliche Abtasttheorem eingehalten ist, also z.B. der Abstand für Antennen mit einem Öffnungswinkel von 180° die halbe Wellenlänge oder bei einem Abstand von 90° eine Wellenlänge beträgt.

In der zumindest einen anderen Sende-Empfangseinheit NKSE 2 kann in entsprechender Weise, wie in der vorstehend beschriebenen Sende-Empfangseinheit NKSE1 ein Vergleichs-Vergleichssignal sigCC12 gebildet wurde, ein Vergleichs-Vergleichssignal sigCC21 gebildet werden. Bei Kanalreziprozität sind die Informationen, die aus den Vergleichs- Vergleichssignalen sigCC21 und sigCC12 extrahiert werden können, jedoch identisch. Daher reicht es i.d.R. aus, nur eines der beiden Vergleichs-Vergleichssignale zu bilden.

Optional kann zusätzlich durch eine entsprechende Vorgehensweise das Vergleichssignal sigC12 der ersten Sende-Empfangseinheit NKSE1 mit der bzw. einer Datenschnittstelle CommTX, CommRX der ersten Sende-Empfangseinheit NKSE1 zu der bzw. einer Datenschnittstelle CommTX, CommRX der zweiten und/oder weiteren Sende-Empfangseinheit NKSE2 übertragen und einer weiteren Signalvergleichseinheit SigComp21 dieser zweiten und/oder weiteren Sende-Empfangseinheit NKSE2 angelegt. Der weiteren Signalvergleichseinheit SigComp21 in der zweiten und/oder weiteren Sende-Empfangseinheit NKSE2 wird als weiteres Signal das in dieser Sende-Empfangseinheit NKSE2 gebildete Vergleichssignal sigC21 zugeführt. Mit der weiteren Signalvergleichseinheit SigComp21 wird so ebenfalls ein Vergleichs-Vergleichssignal sigCC21 gebildet.

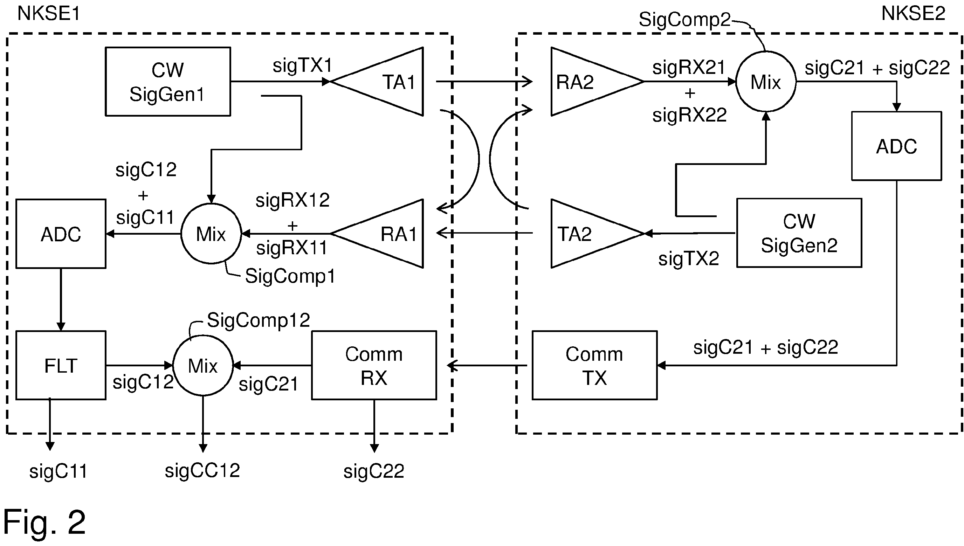

Anhand einer beispielhaften Ausführungsform, die in Fig. 2 veranschaulicht ist, werden eine Grundfunktion und ein Grundaufbau einer geeigneten nicht-kohärenten Sende-Empfangseinheit nun exemplarisch erläutert.

Aus Gründen einer einfachen mathematischen Darstellung werden die Signalgeneratoren zunächst insbesondere als Sinussignalgeneratoren angenommen. Mathematisch werden die generierten CW-Signale (CW= continous wave / kontinuierliche Welle) jeweils als ein komplexwertiges sinusförmiges Dauerstrichsignal bei einer festen Kreisfrequenz $\omega1$ bzw. $\omega2$ der beispielhaften Sende-Empfangseinheiten NKSE1, NSKE2 dargestellt. Ein Dauerstrichsignal ist insbesondere ein Signal, das mit konstanter Frequenz kontinuierlich in einem Zeitraum abgestrahlt wird. Eine Übertragung dieser Signaldarstellung auf reellwertige Signale ist als solches bekannt. Die als CW-Sendesignale angenommenen ersten Signale sigTX1, sigTX2 der beiden Sende-Empfangseinheiten NKSE1, NSKE2 seien abhängig von der Zeit t wie folgt definiert:

$$sigTX1 = e^{j\left(\omega_1\left(t-T_{01}\right)+\varphi_1\right)} \text{ und } sigTX2 = e^{j\left(\omega_2\left(t-T_{02}\right)+\varphi_2\right)}$$

Startzeiten der Signale sigTX1, sigTX2 sind T01 bzw. T02 und Phasen $\varphi1$ und $\varphi2$ sind beliebige Nullphasenwinkel, d.h. Winkel zum Zeitpunkt t = 0. Bei zeitbegrenzten Signalen werden die Startzeiten der Signale vorzugsweise so gewählt, dass die beiden Signale sigTX1, sigTX2 sich nennenswert überlappen. Sei T eine Zeitdauer der beiden Signale sigTX1, sigTX2 und $\Delta T12$ ein Betrag der Differenz der Startzeiten T01 bzw. T02, so wird vorzugsweise gefordert, dass die Zeitdauer T sehr viel größer als der Betrag der Differenz $\Delta T12$ ist, vorteilhafterweise mindestens 10 x mal größer. Ist dies nicht der Fall, so werden die Sende-Empfangseinheiten NKSE1, NKSE2 mit Einrichtungen ausgestattet, die ausgebildet sind, die Sende- und Empfangssignale sigTX1, sigTX2, sigRX21, sigRX12 zu speichern, um sie im Anschluss an eine Signalübertragung offline zu vergleichen.

Die eine der Sende-Empfangseinheiten NKSE1 sendet das erste Signal sigTX1 aus. Dieses Signal wird zum einen zur zumindest einen anderen der Sende-Empfangseinheiten NKSE2 übertragen und dort als das Signal sigRX21 empfangen. Zum anderen kann das ausgesendete Signal aber auch an einem Objekt reflektiert zurück zu der dieses sendenden der Sende-Empfangseinheiten NKSE1 gelangen und wird dort als Signal sigRX11 empfangen. Folglich gilt für das noch nicht heruntergemischte Signal:

$$sigRX21 = e^{j\left(\omega_1\left(t - T_{01} - \tau_{12}\right) + \varphi_1 + \varphi_{12}\right)}$$

und

$$sigRX11 = e^{j\left(\omega_1\left(t - T_{01} - \tau_{11}\right) + \varphi_1 + \varphi_{11}\right)},$$

wobei $\tau_{12}$ eine Laufzeit des Signals von der einen, insbesondere ersten der Sende-Empfangseinheiten NKSE1 zur anderen, insbesondere zweiten der Sende-Empfangseinheiten NKSE2 und $\tau_{11}$ eine Laufzeit des Signals von der einen, insbesondere ersten der Sende-Empfangseinheiten NKSE1 zu einem Objekt und wieder zu sich selber zurück darstellen. Durch Phasen $\varphi_{12}$ und $\varphi_{11}$ werden insbesondere alle konstanten system- und reflexionsbedingten Phasenverschiebungen, die auftreten können, berücksichtigt.

Die andere Sende-Empfangseinheit NKSE2 sendet deren Signal sigTX2 aus. Dieses Signal wird zum einen zur insbesondere ersten der Sende-Empfangseinheiten NKSE1 übertragen und dort als das Signal sigRX12 empfangen. Zum anderen kann das Signal aber auch an Objekten reflektiert und zurück zur dieses aussendenden anderen Sende-Empfangseinheit NKSE2 gelangen und wird dort als das Signal sigRX22 empfangen. Folglich gilt:

$$sigRX12 = e^{j\left(\omega_2\left(t - T_{02} - \tau_{21}\right) + \varphi_2 + \varphi_{21}\right)}$$

und

$$sigRX22 = e^{j\left(\omega_2\left(t - T_{02} - \tau_{22}\right) + \varphi_2 + \varphi_{22}\right)},$$

wobei $\tau_{21}$ eine Laufzeit des Signals von der anderen, insbesondere zweiten der Sende-Empfangseinheiten NKSE2 zur einen, insbesondere ersten der Sende-Empfangseinheiten NKSE1 und $\tau_{22}$ eine Laufzeit des Signals von der anderen Sende-Empfangseinheit NKSE2 zu einem Objekt und wieder zurück darstellen. Bei Kanalreziprozität sind die Laufzeiten $\tau_{21}$ und $\tau_{12}$ gleich, wovon im Folgenden ausgegangen wird. Durch Phasen bzw. Phasenwerte $\varphi_{21}$ und $\varphi_{22}$ werden insbesondere alle konstanten system- und reflexionsbedingten Phasenverschiebungen, die auftreten können, berücksichtigt. Bei Kanalreziprozität sind die Phasen $\varphi_{21}$ und $\varphi_{12}$ gleich, wovon im Folgenden vereinfachend ausgegangen wird.

Die Signalvergleichseinheiten SigCompl, SigComp2 sind im Ausführungsbeispiel als Mischer Mix ausgeführt. Mit ihnen werden die empfangenen Signale sigRX21, sigRX11 bzw. sigRX12, sigRX22 jeweils in ein niederfrequentes Frequenzband herunter gemischt. Es ist als solches allgemein bekannt, dass ein Mischvorgang systemtheoretisch als Multiplikation ausgedrückt werden kann bzw. ein Heruntermischen bei zwei komplexen Sinussignalen als Multiplikation eines der Signale mit dem konjugiert komplexen (* = Zeichen für Konjugation) des anderen Signals. Es gilt daher:

$$sigC12 = sigTX1 \cdot sigRX12^* = e^{j\left(\omega_1\left(t - T_{01}\right) + \varphi_1\right)} \cdot e^{-j\left(\omega_2\left(t - T_{02} - \tau_{21}\right) + \varphi_2 + \varphi_{21}\right)}$$
$$= e^{j\left(\omega_1\left(t - T_{01}\right) - \omega_2\left(t - T_{02} - \tau_{12}\right) + \varphi_1 - \varphi_2 - \varphi_{21}\right)},$$

$$sigC11 = sigTX1 \cdot sigRX11^*$$
$$= \cdot e^{j\left(\omega_1\left(t - T_{01}\right) + \varphi_1\right)} \cdot e^{-j\left(\omega_1\left(t - T_{01} - \tau_{11}\right) + \varphi_1 + \varphi_{11}\right)} = e^{j\left(\omega_1\tau_{11} + \varphi_{11}\right)},$$

sowie:

$$sigC21 = sigTX2 \cdot sigRX21^{*}$$

$$= e^{j\left(\omega_2\left(t-T_{02}\right)+\varphi_2\right)} \cdot e^{-j\left(\omega_1\left(t-T_{01}-\tau_{12}\right)+\varphi_1+\varphi_{12}\right)}$$

$$= e^{j\left(\omega_2\left(t-T_{02}\right)-\omega_1\left(t-T_{01}-\tau_{12}\right)+\varphi_2-\varphi_1-\varphi_{12}\right)}$$

$$sigC22 = sigTX2 \cdot sigRX22^{*}$$

$$= \cdot e^{j\left(\omega_2\left(t-T_{02}\right)+\varphi_2\right)} \cdot e^{-j\left(\omega_2\left(t-T_{02}-\tau_{22}\right)+\varphi_2+\varphi_{22}\right)} = e^{j\left(\omega_2\tau_{22}+\varphi_{22}\right)}$$

Es werden in der Signalvergleichseinheit SigComp1 der ersten Sende-Empfangseinheit NKSE1 das Vergleichssignal sigC12 aus dem Signal SigTX1 der ersten Sende-Empfangseinheit NKSE1 und dem darin empfangenen Signal sigRX12 der anderen Sende-Empfangseinheit NKSE2 und ein Vergleichssignal sigC11 aus dem Signal SigTX1 der ersten Sende-Empfangseinheit NKSE1 und dem darin empfangenen rückflektierten Signal sigRX11 gebildet. In der Signalvergleichseinheit SigComp2 der anderen, insbesondere zweiten Sende-Empfangseinheit NKSE2 werden das Vergleichssignal sigC21 aus dem Signal SigTX2 dieser Sende-Empfangseinheit NKSE2 und dem darin empfangenen Signal sigRX21 der anderen, ersten Sende-Empfangseinheit NKSE1 und ein Vergleichssignal sigC22 aus dem Signal SigTX2 der zweiten Sende-Empfangseinheit NKSE2 und dem darin empfangenen rückflektierten Signal sigRX22 gebildet.

Damit die Vergleichssignale sigC12 und sigC11 bzw. die Vergleichssignale sigC21 und sigC22 einfach voneinander getrennt werden können, d.h. insbesondere ein Multiplexbetrieb ermöglicht wird, wird vorzugsweise die Kreisfrequenz $\omega1$ der einen Sende-Empfangseinheit NKSE1 unterschiedlich zur Frequenz $\omega2$ der anderen Sende-Empfangseinheit NKSE2 gewählt. Ein Frequenzversatz $|\Delta12| = |\omega1-\omega2|$ sollte vorzugsweise größer als Null aber nicht zu groß gewählt werden. Letzteres ist sinnvoll, um eine Bandbreite des Vergleichssignals insbesondere für Komponenten, wie einem Analog-Digital-Wandler ADC, einem Filter FLT, der weiteren Signalvergleichseinheit SigComp12 und den Datenschnittstellen CommTX, CommRX nicht unnötig zu erhöhen. Insbesondere sollte der Frequenzversatz $|\Delta12|$ kleiner sein als derzeit z.B. 20 MHz als üblicher Betriebsfrequenz. Die Bandbreite des heruntergemischten Vergleichssignals entspricht den im Signal enthaltenen Frequenzen, insbesondere dem Bereich von Null bis zur höchsten im Vergleichssignal enthaltenen Frequenz.

Solche Analog-Digital-Wandler ADC sind insbesondere den Signalvergleichseinheiten SigCompl, SigComp2 nachgeschaltet. Je nach Ausgestaltung sind den Analog-Digital-Wandlern ADC insbesondere ein solcher Filter FLT oder die Datenschnittstellen CommTX, CommRX nachgeschaltet. Ein solcher Filter FLT ist insbesondere der weiteren Signalvergleichseinheit SigComp12 vorgeschaltet. Die weitere Signalvergleichseinheit SigComp12 ist beispielsweise wieder als ein Mischer MIX ausgebildet.

Die zwischen den Filter FLT und die empfangende Datenschnittstelle CommRX geschaltete weitere Signalvergleichseinheit SigComp12 bekommt von dem Filter FLT das Vergleichssignal sigC12 angelegt, welches aus dem in dieser Sende-Empfangseinheit NKSE1 erzeugten Signal sigTX1 und dem von der anderen Sende-Empfangseinheit NKSE2 über den Pfad SP empfangenen Signal sigRX12 gebildet wird. Außerdem wird der weiteren Signalvergleichseinheit SigComp12 von der Datenschnittstelle CommRX das von der anderen Sende-Empfangseinheit NKSE2 übertragene Signal sigC21 angelegt.

Optional stellt der Filter FLT das durch Zurückreflexion entstandene Vergleichssignal sigC11 für eine weitere Verarbeitung bereit. Optional stellt die Datenschnittstelle CommRX das mit übertragene Vergleichssignal sigC22, welches durch Zurückreflexion in der anderen Sende-Empfangseinheit NKSE2 entstanden ist und mit übertragen wurde, für eine weitere Verarbeitung bereit.

Werden mehr als 2 nicht-kohärente Sende-Empfangseinheiten NKSEi mit i = 1, 2, ... N verwendet, so werden die Signale aller Sende-Empfangseinheiten NKSEi insbesondere im Multiplexbetrieb betrieben. Im dargestellten Ausführungsbeispiel wird dann bei einer dritten nicht-kohärente Sende-Empfangseinheiten für den jeweiligen Frequenzversatz z.B. gelten, dass $|\Delta12| \neq |\Delta13| \neq |\Delta23|$ und $|\Delta12| \neq 0$, $|\Delta13| \neq 0$, $|\Delta23| \neq 0$ ist.

Werden als durch die Sende-Empfangseinheiten erzeugte Signale sigTX1 bzw. sigTX2 komplizierte modulierte Signale, also z.B. FMCW-, FSK-, FSCW- oder OFDM-Signale verwendet, so werden bzw. sind diese Signale sigTX1 bzw. sigTX2 vorzugsweise so moduliert, dass sie multiplexfähig sind, also dass alle durch die Sende-Empfangseinheiten erzeugten, ausgesendeten Signale nach dem Empfang in einer Sende-Empfangseinheit getrennt und der jeweiligen Sende-Empfangseinheit, die ein Signal gesendet hat, zugeordnet werden können. Dabei sind zur Signaltrennung insbesondere übliche Code-, Frequenz und Zeitmultiplexverfahren anwendbar.

Die Vergleichssignale sigC11, sigC22, die aus durch eine der Sende-Empfangseinheiten erzeugten, ausgesendeten und wieder zurück reflektierten Signalen entstanden sind, stellen insbesondere für sich betrachtet übliche CW-Radarsignale dar bzw. bei Verwendung von z.B. FMCW modulierten Sendesignalen insbesondere für sich betrachtet übliche FMCW-Radarsignale dar. Die Komponenten und deren Anordnung zur Gewinnung dieser Vergleichssignale sigC11, sigC22 entsprechen insbesondere für sich betrachtet einem üblichen CW-Radar. Daher ist als solches bekannt, wie CW-Radarsysteme aufgebaut sind und wie CW-Radarsignale verarbeitet werden und wie bei Verwendung mehrerer Signalfrequenzen Entfernung und Geschwindigkeit zu mehreren Zielen über FMCW, FSK, FHOP oder OFDM Radar-Verfahren bestimmbar ist.

Insbesondere beide Vergleichssignale sigC22, sigC21 der ersten Signalvergleichseinheit SigComp2 in der insbesondere zweiten Sende-Empfangseinheit NKSE2 werden über die Schnittstellen CommTX, CommRX zur insbesondere ersten Sende-Empfangseinheit NKSE1 übertragen und dort weiterverarbeitet. Optional ist es auch möglich, die entsprechenden beiden Vergleichssignale sigC11, sigC12, die in der insbesondere ersten Sende-Empfangseinheit NKSE1 gebildet werden, in gleichartiger Weise zur anderen, insbesondere zweiten Sende-Empfangseinheit NKSE2 zu übertragen und dort zu verarbeiten. Der Übersichtlichkeit halber sind diese Option und die dafür notwendigen Komponenten im Ausführungsbeispiel nicht dargestellt.

Wie zuvor dargestellt, besteht ein besonders bevorzugter Ansatz darin, die so übertragenen Vergleichssignale sigC21 und sigC12 mindestens einer weiteren Signalvergleichseinheit SigComp12 zuzuführen. Im Beispiel ist dazu in der insbesondere ersten Sende-Empfangseinheit NKSE1 die weitere Signalvergleichseinheit SigCom12 insbesondere als Mischer ausgeführt, der das mittels Übertragung erhaltene Vergleichssignal sigC21 und das in dieser Sende-Empfangseinheit NKSE1 gebildete Vergleichssignal sigC12 verarbeitet, insbesondere multipliziert. Als Vergleichs-Vergleichssergebnis, insbesondere Mischergebnis ergibt sich unter Verwendung der Phasenwerte $\varphi12 = \varphi21$:

$$sigCC12 = sigC12 \cdot sigC21$$
$$= e^{j\left(\omega_1\left(t-T_{01}\right)-\omega_2\left(t-T_{02}-\tau_{12}\right)+\varphi_1-\varphi_2-\varphi_{21}\right)} \cdot e^{j\left(\omega_2\left(t-T_{02}\right)-\omega_1\left(t-T_{01}-\tau_{12}\right)+\varphi_2-\varphi_1-\varphi_{12}\right)}$$

$$\Rightarrow \quad sigCC12 = e^{-j\left(\left(\omega_1+\omega_2\right)\tau_{12}-2\varphi_{12}\right)}$$

Wie zu erkennen ist, entspricht nun auch dieses Vergleichs-Vergleichssignal sigCC12 nach dem zweiten Vergleichsvorgang der Form nach einem Signal eines als solchem üblichen CW-Radars, da die Phase des Signals proportional zur Laufzeit $\tau12$ des Signals ist. Durch die wechselseitige Messung und den weiteren Signalvergleich gelingt es, insbesondere alle unbekannten Komponenten der zunächst inkohärenten Signale zu kompensieren. Auf diese Art und Weise entsteht ein Radarsignal wie bei einem kohärenten Radar, auch wenn zur Messung die zwei nicht-kohärenten Sende-/Empfangseinheiten NKSE1, NKSE2 verwendet werden.

Da das Vergleichs-Vergleichssignal sigCC12 der Form nach auch einem üblichen CW-Radar-Signal entspricht, können bei Verwendung mehrerer Signalfrequenzen somit auch die für sich genommen bekannten FMCW-, FSK-, FHOP- oder OFDM-Radar-Verfahren angewendet werden, um eine Entfernung zwischen den beiden nicht-kohärenten Sende-Empfangseinheiten NKSE1, NKSE2 und eine relative Geschwindigkeit zwischen diesen zu bestimmen. FMCW-, FSK-, FHOP- oder OFDM-Radar-Verfahren sind im Gebiet der Radartechnik als solche bekannt und sind auf die übertragenen ersten Signale sigTX1, sigTX2 anwendbar.

Befinden sich die Sende-Empfangseinheiten NKSE1, NKSE2 in einer zueinander unbekannten Entfernung oder bewegen sie sich mit einer unbekannten Relativgeschwindigkeit zueinander, so kann, wie ausgeführt, über die Auswertung des Vergleichs-Vergleichssignals sigCC12, welches bei mehreren Frequenzen bestimmt wird, die Entfernung und Geschwindigkeit der Sende-Empfangseinheiten zueinander bestimmt werden, sofern die Signale zwischen den Sende-Empfangseinheiten direkt über eine Sichtverbindung ausgetauscht werden.

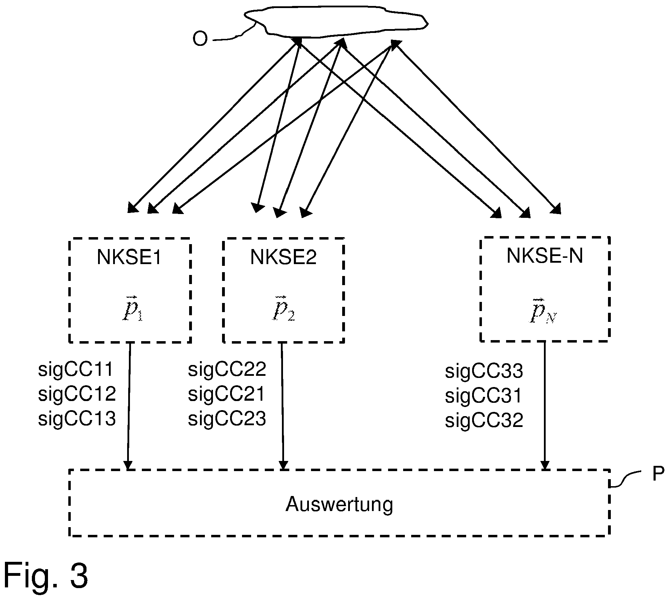

Fig. 3 zeigt eine mögliche Anordnung mehrerer nicht-kohärenter Sende-Empfangseinheiten NKSE1, NKSE2, ... NKSE-N in einer Messsituation zur Ortung bzw. zur Abbildung eines Objektes O. Die Sende-Empfangseinheiten NKSE1, NKSE2, ... NKSE-N haben jeweils eine bekannte Position $\vec{p_1}, \vec{p_2}, ... \vec{p_N}$. Eine insbesondere gemeinsame Auswerteeinrichtung P bekommt von den Sende-Empfangseinheiten NKSE1, NKSE2, ... NKSE-N jeweils insbesondere Vergleichs-Vergleichssignale sigCC11, sigCC12, sigCC13, sigCC22, sigCC21, sigCC23, .... sigCC33, sigCC31, sigCC32 zur weiteren Verarbeitung angelegt. Die Vergleichs-Vergleichssignale sigCC11, sigCC12, sigCC13, sigCC22, sigCC21, sigCC23, .... sigCC33, sigCC31, sigCC32 decken dabei Kombinationen von mehr als zwei der Sende-Empfangseinheiten NKSE1, NKSE2, ... NKSE-N ab, insbesondere alle möglichen Kombinationen aller der Sende-Empfangseinheiten NKSE1, NKSE2, ... NKSE-N ab, welche sich durch eine solche Anordnung ergeben.

Befinden sich die Sende-Empfangseinheiten NKSE1, NKSE2 in einem konstanten und bekannten Abstand zueinander und bestrahlen diese mit ihren Sendesignalen gemeinsam ein Objekt O, so kann in vergleichbarer Weise wie bei den zurück reflektierten Vergleichssignalen sigC11 und sigC22 gemäß vorstehender Ausgestaltung ein Abstand bzw. eine Länge der Signal-Übertragungsstrecke bestimmt bzw. ermittelt werden und es kann eine Relativgeschwindigkeit zum Objekt O wie bei dem Vergleichs-Vergleichssignal sigCC12 bestimmt bzw. ermittelt werden.

Es kann also durch Auswertung der zwei oder mehr Vergleichssignale sigC11, sigC22, die aufgrund Rückreflexionen gebildet sind, und dem Vergleichs-Vergleichssignal sigCC12 jeweils eine Länge der Signal-Übertragungsstrecke bestimmt werden. Bei einer beispielsweise rundstrahlenden Antenne liefern die Entfernungswerte, die aus den Vergleichssignalen sigC11, sigC22, die aufgrund Rückreflexionen gebildet sind, folglich jeweils eine Kreisbahn, auf der sich das Objekt O befinden kann, und das Vergleichs-Vergleichssignal sigCC12 liefert eine Hyperbel. Durch als solches bekannte Multilaterationsverfahren kann somit die Position des Objektes O insbesondere relativ zu den Positionen der Sende-Empfangseinheiten NKSE1, NKSE2 bestimmt werden. Durch Verwendung zusätzlich eingesetzter weiterer Sende-Empfangseinheiten NKSE-N verbessert sich die Ortungsgenauigkeit bzw. es wird eine verbesserte Mehrzielfähigkeit erreicht.

Die Abweichungen der Phasenwerte $\varphi$11, $\varphi$22 und $\varphi$12 untereinander sind üblicherweise konstant, aber nicht zwangsläufig bekannt. Sind die Abweichungen der Phasenwerte $\varphi$11, $\varphi$22 und $\varphi$12 untereinander jedoch z.B. aus einer Kalibrationsmessung bekannt, so können die Signale sigC11, sigC22, die aufgrund Rückreflexionen gebildet sind, und das Vergleichs-Vergleichssignal sigCC12 auch bzgl. ihrer Phasen verglichen werden. Dies erlaubt dann sehr exakte Winkelmessungen über insbesondere Phasenmonopulsverfahren oder interferometrische Verfahren sowie die Anwendung von sogenannten rekonstruktiven Bildgebungsverfahren, wie etwa den SAR-Rekonstruktionsverfahren oder der Breitbandholographie. Rekonstruktive Verfahren sind als solche auch unter den Begriffen digital Beamforming oder Beugungstomographie bekannt. Für Rekonstruktionsverfahren ist es vorteilhaft, eine größere Anzahl - z.B. N Stück - von Sende-Empfangseinheiten zu verwenden. Vorteilhaft ist bei Anwendung des hier bevorzugten Verfahrens, dass nicht nur die Phasenwerte $\varphi$11, $\varphi$22, ..., $\varphi$NN von N unilateralen/monostatischen Messwegen bestimmbar sind, wie dies bei verteilten nicht kohärent arbeitenden Radaren als solches üblich wäre, sondern, dass insbesondere auch die Phasenwerte $\varphi$12, $\varphi$13, ..., $\varphi$1N, $\varphi$23, $\varphi$24, ... 2N, ..., $\varphi$N-1N von Querübertragungswegen in die Auswertung eingehen, wodurch sich die Messinformation drastisch erhöht. Bei geeigneter Wahl der Antennenpositionen in sogenannten ausgedünnten Feldern (engl. sparse array) ist es möglich, mit relativ wenigen Sende-Empfangseinheiten gute Rekonstruktionsergebnisse zu erzielen.

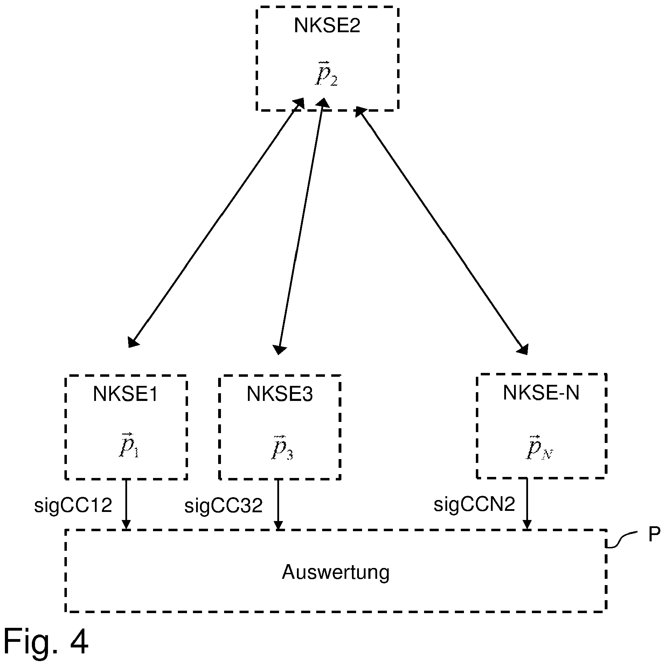

Fig. 4 zeigt eine mögliche Anordnung mehrere nicht-kohärenten Sende-Empfangseinheiten NKSE1, NKSE3, ..., NKSE-N zu einem MIMO-Sekundärradar in einer Messsituation zur Ortung zumindest einer weiteren nicht-kohärenten Sende-Empfangseinheit NKSE2. Im Beispiel seien die N-1 Positionen $\vec{p_1}$, $\vec{p_3}$, ... $\vec{p_N}$ der Sende-Empfangseinheiten NKSE1, NKSE3, ... NKSE-N bekannt. Die Position $\vec{p_2}$ der weiteren bzw. anderen, insbesondere zweiten Sende-Empfangseinheit NKSE 2 sei zunächst unbekannt.

Durch das bevorzugte Verfahren kann von jeder der Sende-Empfangseinheiten NKSE1, NKSE3, ..., NKSE-N aus der Abstand zu einer anderen der Sende-Empfangseinheiten NKSE1, NKSE3, ..., NKSE-N bestimmt werden. Im Ausführungsbeispiel liefert z.B. das Vergleichs-Vergleichssignal sigCC12 unter Verwendung der in der ersten und der zweiten dieser Sende-Empfangseinheiten NKSE1, NKSE2 erzeugten Signale sigTX1, sigTX2 den Abstand zwischen der ersten Sende-Empfangseinheit NKSE1 und der zweiten Sende-Empfangseinheit NKSE2 und die dritte Sende-Empfangseinheit NKSE3 und z.B. die N-te Sende-Empfangseinheit NKSE-N liefern jeweils ebenfalls einen Entfernungswert zur zweiten Sende-Empfangseinheit NKSE2. Durch als solches bekannte Multilaterationsverfahren kann somit die Position der zweiten Sende-Empfangseinheit NKSE2 bestimmt werden. Durch Verwendung weiterer geeignet angeordneter Sende-Empfangseinheiten verbessert sich die Ortungsgenauigkeit.

Die Abweichungen der Phasenwerte $\varphi$12, $\varphi$32 bis $\varphi$N2 untereinander sind üblicherweise konstant, aber nicht zwangsläufig bekannt. Sind die Abweichungen der Phasenwerte jedoch bekannt, was beispielsweise durch eine Kalibrierung sichergestellt werden kann, so werden gemäß einer bevorzugten Ausgestaltung beispielsweise die Vergleichssignale sigC12, sigC32, die auf Basis eines in der Sende-Empfangseinheit NKSE1, NKSE3 erzeugten und eines von der anderen, insbesondere zweiten Sende-Empfangseinheit NKSE2 gebildet werden, und das Vergleichs-Vergleichssignal sigCCN2, das auf Basis von Signalen z.B. der N-ten Sende-Empfangseinheit NKSE-N und der zweiten Sende-Empfangseinheit NKSE2 gebildet wird, auch bzgl. ihrer Phasen bzw. Phasenwerte $\varphi$12, $\varphi$32 bis $\varphi$N2 verglichen. Dies erlaubt dann sehr exakte Winkelmessungen über Phasenmonopulsverfahren oder interferometrische Verfahren sowie die Anwendung von sogenannten rekonstruktiven Ortungsverfahren, wie etwas den SAR-Rekonstruktionsverfahren oder der Breitbandholographie. Alternativ kann eine solche Verfahrensweise z.B. auch durchgeführt werden, indem jede Sende-Empfangseinheit mit mindestens 2 Empfangskanälen betrieben wird und deren Sende- und Übertragungssignale verwendet werden. Dadurch kann der Eintreffwinkels der Signale im in der Sende-Empfangseinheit über die Auswertung der Phasendifferenzen der Kanäle erfolgen.

Geeignete SAR-Verfahren zur Ortung eines Transponders sind z.B. aus den einleitend genannten Dokumenten bekannt. Aufgrund des hier beschriebenen bevorzugten dieses Verfahrens und einer solchen Anordnung können solche Verfahren zur Ortung eines Transponders nicht mehr nur für sogenannte Backscatter-Transponder angewendet werden, die sich dadurch auszeichnen, dass ein Radarsignal von einem Transpondern mit kohärenter Trägerphase moduliert reflektiert wird. Eine Übertragung auf andere Transpondersysteme ist nun auch möglich, auch wenn Transponder mit einer eigenen Signalquelle üblicherweise nicht-kohärent antworten. Durch das beschriebene Verfahren ist es nun insbesondere möglich, einen Phasenwert $\varphi 12$, $\varphi 32$, ..., $\varphi N2$ zu bestimmen, der in einem proportionalen Zusammenhang zu der jeweiligen Entfernung zwischen den jeweils 2 miteinander interagierenden inkohärenten bzw. nicht-kohärenten Sende-Empfangseinheiten steht. Es sind daher alle Ortungs- und Rekonstruktionsverfahren anwendbar, wie sie aus dem Bereich der Primärradartechnik und aus dem Bereich der Ortung von Backscatter-Transpondern als solches bekannt sind. Gegenüber Backscatter-Transponder-Systemen haben die Transponder-Systeme mit den hier beschriebenen nichtkohärenten Sende-Empfangseinheiten den Vorteil, dass ihre Reichweite signifikant größer sein kann, insbesondere ist, und komplexere Multiplexverfahren anwendbar sind.

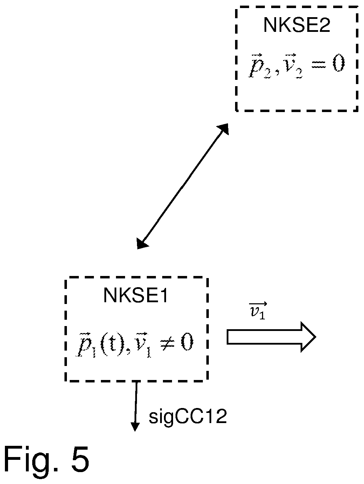

Besonders vorteilhaft lässt sich das bevorzugte Verfahren anwenden, wenn sich bei einer Messung zwischen 2 nicht-kohärenten Sende-Empfangseinheiten NKSE1, NKSE2 zumindest eine der Sende-Empfangseinheiten NKSE1 bewegt und durch eine assistierende Sensorik, z.B. mit einer Inertialsensorik, einem Odometer oder anderen bewegungsmessenden Einrichtungen, eine Relativbewegung zwischen den Sende-Empfangseinheiten NKSE1, NKSE2 bestimmt wird. Eine dafür exemplarische SAR-Messsituation zeigt Fig. 5 mit einer Aufnahme-Situation für Sekundärradar-Apertur-Synthese. Da bei einer Messung zwischen 2 Sende-Empfangseinheiten NKSE1, NKSE2 mit dem hier beschriebenen Verfahren ein Signal gebildet wird, dessen Phase proportional zur Entfernung zwischen den Sende-Empfangseinheiten NKSE1, NKSE2 ist, sind folglich die in der Radartechnik als solches bekannten Synthetische-Apertur-Verfahren (SAR) bzw. inverse Synthetische-Apertur-Verfahren (ISAR) anwendbar.

Eine insbesondere erste Sende-Empfangseinheit NKSE1 bewegt sich zu einer Zeit t ausgehend von einer Position $\vec{p1}(t)$ mit einer Geschwindigkeit $\vec{v_1}$ ungleich Null entlang einer Trajektorie und führt während der Fahrt mehrfach Messung zur anderen, insbesondere zweiten Sende-Empfangseinheit NKSE 2 nach dem hier beschriebenen Verfahren durch. Die zweite Sende-Empfangseinheit NKSE 2 befindet sich z.B. an einer Position $\vec{p_2}(t)$ mit einer Geschwindigkeit $\vec{v_2}$ gleich Null. Verwendet wird für eine Auswertung insbesondere ein Vergleichs-Vergleichssignal sigCC12 dieser beiden Sende-Empfangseinheiten NKSE1, NKSE2. Durch einen holographischen Rekonstruktionsalgorithmus, wie er z.B. aus den einleitend genannten Dokumenten als solches bekannt ist, ist es dann möglich die Position der zweiten Sende-Empfangseinheit NKSE2 relativ zur ersten Sende-Empfangseinheit NKSE1 hochgenau zu bestimmen. Dass gezeigte Verfahren und die Anordnung eignen sich daher insbesondere zur hochgenauen Ortung von Fahrzeugenzeugen, wie Kfz, Flugzeug, Bahnfahrzeugen, mobilen Robotern, autonomen Fahrzeuge etc.. Die erste Sende-Empfangseinheit NKSE1 befindet sich beispielsweise auf dem Fahrzeug und weiterer Sende-Empfangseinheiten NKSE2, etc. befinden sich als Wegmarken an bekannten Positionen. Bewegt sich das Fahrzeug, so kann die erste Sende-Empfangseinheit NKSE1 ihre relative Position zu den anderen Sende-Empfangseinheiten NKSE2 etc. nach einem SA-Verfahren bestimmen und somit ihre eigene Position im Koordinatensystem der Wegmarken bestimmen.

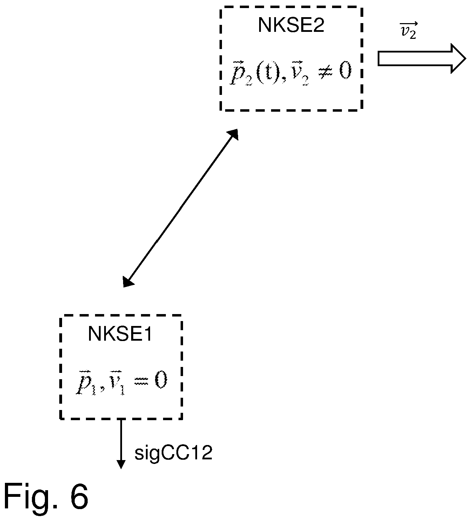

Fig. 6 zeigt eine exemplarische Messsituation bzw. Aufnahme-Situation für inverse Sekundärradar-Apertur-Synthese. Eine insbesondere zweite Sende-Empfangseinheit NKSE2 bewegt sich zu einer Zeit t ausgehend von einer Position $\vec{p_2}(t)$ mit einer Geschwindigkeit $\vec{v_2}$ ungleich Null entlang einer Trajektorie und führt während der Bewegung mehrfach Messungen nach dem bevorzugten Verfahren mit zumindest einer weiteren, insbesondere ersten Sende-Empfangseinheit NKSE1 durch. Durch z.B. eine Intertialplattform bestimmt die zweite Sende-Empfangseinheit NKSE2 zudem den Verlauf der Trajektorie und sendet diesen per Funk zur ersten Sende-Empfangseinheit NKSE1, welche insbesondere verbleibt bei einer ortsfesten Position $\vec{p_1}(t)$ und einer Geschwindigkeit $\vec{v_1}$ gleich Null. Dabei wird unter einer Intertialplattform insbesondere eine Anordnung aus Beschleunigungs- und Winkelgeschwindigkeitssensoren verstanden, bevorzugt jeweils 3-achsig ausgeführt verstanden. Verwendet wird für eine Auswertung insbesondere ein Vergleichs-Vergleichssignal sigCC12 dieser beiden Sende-Empfangseinheiten NKSE1, NKSE2. Durch einen holographischen Rekonstruktionsalgorithmus wie er z.B. in einleitend genannten Dokumenten als solches dargestellt wird, wird dann die Position der zweiten Sende-Empfangseinheit NKSE2 relativ zur ersten Sende-Empfangseinheit NKSE1 insbesondere hochgenau bestimmt. Dass gezeigte Verfahren und die Anordnung eignen sich daher insbesondere zur Ortung von mobilen Gegenständen, die mit einem Transponder mit einer solchen nicht-kohärenten Sende-Empfangseinheit ausgestattet wurden, oder insbesondere zur Ortung von derart ausgestatteten Endeffektoren von Robotern oder von z. B. Kranauslegern oder Lastaufnahmemitteln. Werden mehrere ortsfeste Sende-Empfangseinheiten zur Bestimmung der Position einer mobilen Sende-Empfangseinheit eingesetzt, so wird besonders vorteilhaft das in einleitend genannten Dokumenten als "multilateral inverse synthetic aperture secondary radar" bezeichnete Ortungsverfahren verwendet.

Die nachfolgenden Figuren zeigen mögliche weiterführende Ausgestaltungen solcher nicht-kohärenten Sende-Empfangseinheiten.

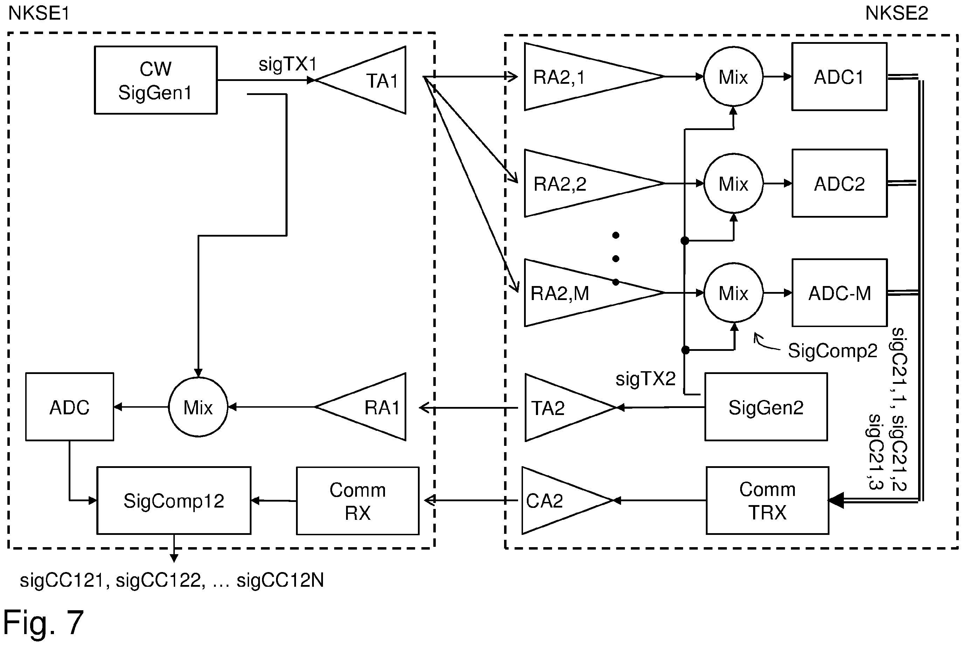

Fig. 7 zeigt eine Anordnung zur Messung eines Winkels zwischen zwei nicht-kohärenten Sende-Empfangseinheiten NKSE1, NKSE2 relativ zu einer Antennenebene mit insbesondere einer Vielzahl von zum Empfang geschalteten Antennen RA2,1, RA2,2, RA2,3. Eine erste der Sende-Empfangseinheiten NKSE1 ist insbesondere vergleichbar zu der ersten Sende-Empfangseinheit NKSE1 aus Fig. 2 aufgebaut, wobei ein Filter nicht dargestellt ist oder ganz entfällt. Eine Kommunikations-Schnittstelle CommRX zum Empfang eines von der anderen, insbesondere zweiten Sende-Empfangseinheit NKSE2 ist optional so ausgestaltet, dass diese ein Vergleichssignal empfangen kann, welches von der zweiten Sende-Empfangseinheit NKSE2 mit einer zum Senden ausgelegten Antenne CA2 über auch eine Luftschnittstelle übertragen wird.

Die zweite Sende-Empfangseinheit NKSE2 weist ebenfalls einen Signalgenerator SigGen2 auf, dessen generiertes Signal sigTX2 über eine Antenne TA2 ausgesendet und außerdem ausgekoppelt wird. In der zweiten Sende-Empfangseinheit NKSE2 weisen die mehreren, z.B. drei zum Empfangen geschalteten Antennen RA2,1, RA2,2, RA2,3 jeweils einen nachgeschaltete Signalvergleichseinheit SigComp2 auf, die beispielsweise als Mischer ausgebildet sind. Diesen Signalvergleichseinheiten SigComp2 liegt jeweils zum Mischen mit dem Empfangssignal der Antenne zusätzlich das generierte Signal sigTX2 an. Die Mischsignale werden jeweils direkt übertragen oder insbesondere jeweils einem nachgeschalteten Analog-Digital-Wandler angelegt und der Kommunikations-Schnittstelle CommTRX zum Übertragen an die andere Sende-Empfangseinheit NKSE1 angelegt. Beispielhaft ist diese Kommunikations-Schnittstelle CommTRX mit der Antenne CA2 zum Senden über die Luftschnittstelle ausgestattet.

Übertragen werden somit an die erste Sende-Empfangseinheit NKSE1 drei oder mehr Vergleichssignale sigC21,1, sigC21,2, sigC21,3, wobei die Vergleichssignale sigC21,1, sigC21,2, sigC21,3 jeweils einen anderem Empfangsort innerhalb der zweiten Sende-Empfangseinheit NKSE zugeordnet sind. In der ersten Sende-Empfangseinheit NKSE1 werden damit bevorzugt mehrere Vergleichs-Vergleichssignale sigCC121, sigCC122, ... sigCC12N gebildet und zur Auswertung bereitgestellt oder ausgewertet.

Durch eine solche Verwendung mehrerer kohärent gekoppelter Empfangsantennen in einer Sende-Empfangseinheit NKSE2 ist es möglich, nicht nur den Abstand und die Geschwindigkeit zwischen zwei Sende-Empfangseinheiten NKSE1, NKSE2 zu bestimmen, sondern auch ihren Winkel zueinander. Wie der Einfallswinkel einer Welle mit mehreren kohärenten Empfangskanälen bestimmt werden kann, ist als solches für sich genommen bekannt. Mit der Anordnung nach Fig. 7 wird insbesondere auch der Winkel zwischen 2 Sende-Empfangseinheiten NKSE1, NKSE2 relativ zur Antennenebene der Sende-Empfangseinheit NKSE2 mit der Vielzahl von Antennen RA2,1, RA2,2, RA2,3 bestimmt.

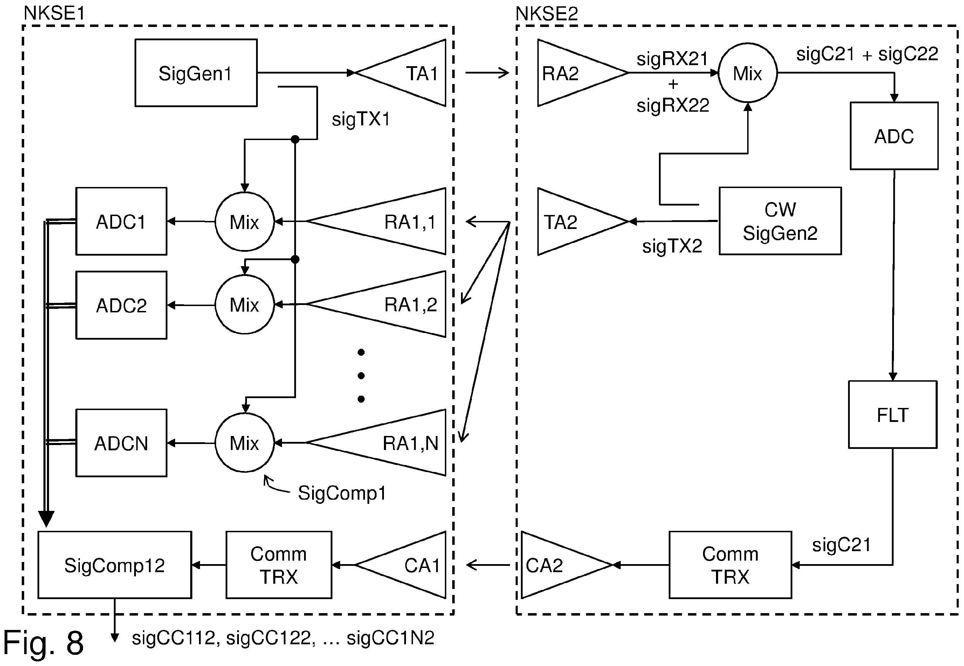

Mit einer Anordnung nach Fig. 8 kann der Winkel zwischen zwei nicht-kohärenten Sende-Empfangseinheiten NKSE1, NKSE2 relativ zu einer Antennenebene der ersten Sende-Empfangseinheit NKSE1 bestimmt werden.

Bei diesem Beispiel ist die erste der Sende-Empfangseinheiten NKSE1 insbesondere vergleichbar zu der zweiten Sende-Empfangseinheit NKSE2 aus Fig. 7 aufgebaut, mit insbesondere einer Vielzahl von zum Empfang geschalteten Antennen RA1,1, RA1,2, RA1,3 ausgestattet. Diesen ist eine Anordnung aus Signalvergleichseinheiten SigComp1 nachgeschaltet, die beispielsweise pro Antenne RA1,1, RA1,2, RA1,3 jeweils einen Mischer aufweisen. Diesen Signalvergleichseinheiten SigComp2 liegt zum Mischen jeweils eines der Empfangssignale einer der Antennen und zusätzlich das in der ersten Sende-Empfangseinheit NKSE1 generierte Signal sigTX1 an. Die mit den Mischern erzeugten Signale werden als Vergleichssignale jeweils einem nachgeschalteten Analog-Digital-Wandler ADC1, ADC2 bzw. ADCN angelegt und nach Umwandlung oder direkt einer Signalvergleichseinheit SigComp12 angelegt. Der Signalvergleichseinheit SigComp12 werden außerdem ein über eine Kommunikations-Schnittstelle CommTRX empfangenes Signal bzw. darüber empfangene Daten angelegt, welche ein aus der zweiten Sende-Empfangseinheit NKSE2 empfangenes Vergleichssignal sigC21 enthalten. Die Signalvergleichseinheit SigComp12 erzeugt insbesondere mehrere Vergleichs-Vergleichssignale sigCC112, sigCC122, ... sigCC1N2, die zur Auswertung bereitgestellt oder ausgewertet werden.

Beispielhaft ist die Kommunikations-Schnittstelle CommTRX mit einer Antenne CA1 zum Empfangen über die Luftschnittstelle ausgestattet. Entsprechend ist in der zweiten Sende-Empfangseinheit NKSE2 eine Kommunikations-Schnittstelle CommTRX mit einer Antenne CA2 zum Senden über die Luftschnittstelle ausgestattet. Die zweite Sende-Empfangseinheit NKSE2 ist ansonsten beispielsweise wie die zweite Sende-Empfangseinheit NKSE2 aus Fig. 2 ausgestaltet. Als Weiterer Unterschied demgegenüber weist die zweite Sende-Empfangseinheit NKSE2 aus Fig. 8 einen Filter FLT auf, welcher zwischen den Analog-Digital-Wandler ADC und die Kommunikations-Schnittstelle CommTRX geschaltet ist und zu der Kommunikations-Schnittstelle CommTRX nur das Vergleichssignal durchlässt, welches aus dem Vergleich des eigenen erzeugten Signals sigTX2 und einem von der ersten Sende-Empfangseinheit NKSEl empfangenen Signal sigRX21 erzeugt wird.

Werden gemäß einer weiteren Ausgestaltung in beiden nicht-kohärenten Sende-Empfangseinheiten mehrere zum Empfang geschaltete Antennen ausgebildet, so sind der Winkel zwischen den Sende-Empfangseinheiten und die Verkippung der beiden Antennenebenen zueinander bestimmbar. Alternativ oder zusätzlich wäre es beispielsweise auch möglich, mehrere kohärente Sendekanäle zu verwenden.

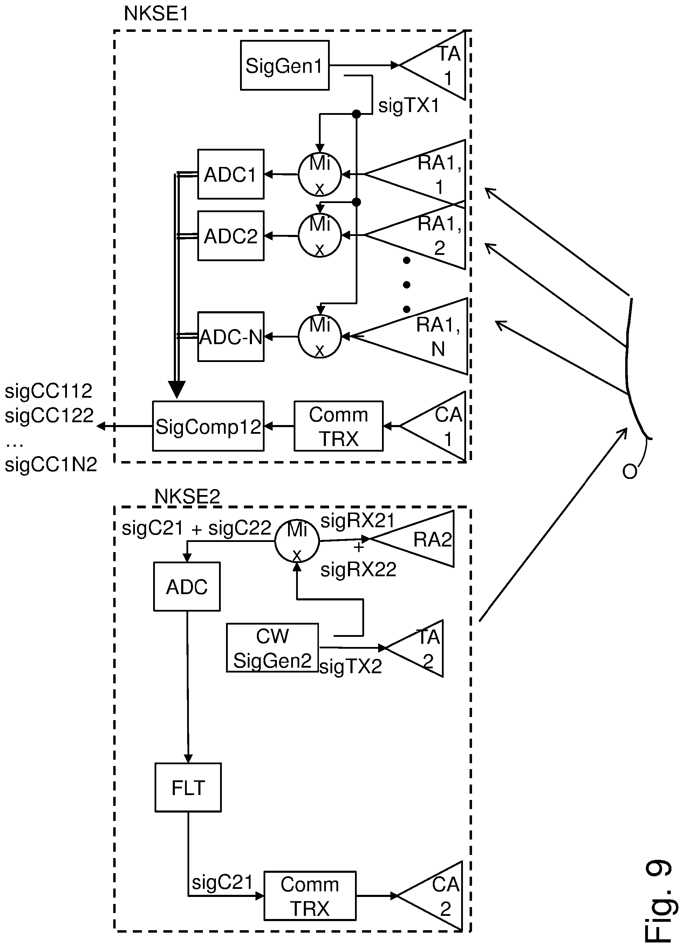

Eine solche Anordnung mit mehreren parallel angeordneten nicht-kohärenten Sende-Empfangseinheiten ist auch für eine Messung von Objekten O als passiven Radarzielen vorteilhaft. Fig. 9 zeigt diesbezüglich beispielhaft eine Anordnung zur Messung mit zwei nicht-kohärenten Sende-Empfangseinheiten NKSE1, NKSE2 auf ein nicht kooperatives Ziel inklusive einer Winkelmessung. Dabei sind die Sende-Empfangseinheiten NKSE1, NKSE2 wie in Fig. 8 ausgestaltet, richten die jeweils ausgesendeten ersten Signale sigTX1 bzw. sigTX2 aber auf das Objekt O, von dem die Signale zu den entsprechenden Antennen RA1,1 RA1,2, ... RA1,N bzw. RA2 reflektiert werden. Mit dieser Anordnung ist zusätzlich zur Entfernung nach einem der vorherigen Verfahren auch ein Eintreffwinkel über die Phasendifferenzen schätzbar und mit der Entfernung kombinierbar. Zur Lösung eines internen Kalibrierungsproblems kann jede Sende-Empfangseinheit auch mit einem sogenannten Backscatter (Rückstreuer) ausgestattet sein, mit dem die Empfangskanäle kalibriert werden.

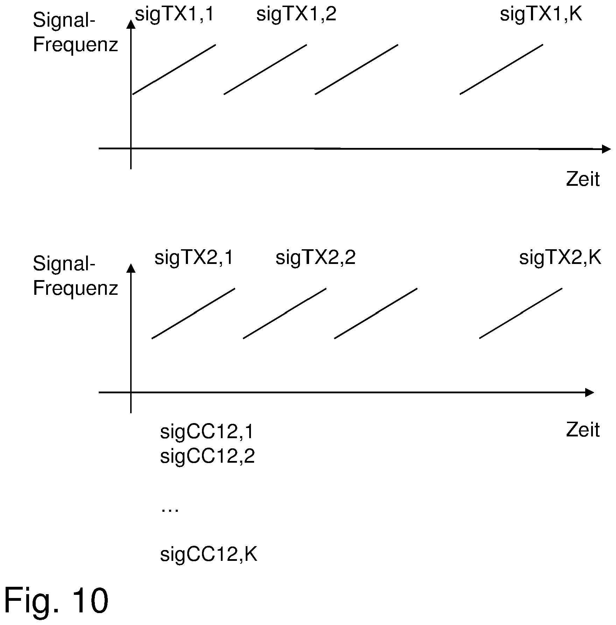

Besonders vorteilhaft zur Entfernung- und Geschwindigkeitsmessung ist es, als Messsignal bzw. durch den jeweiligen Signalgenerator SigGen1, SigGen2 als dessen Signal sigTX1, sigTX2 sogenannte Multirampen-FMCW-Signale zu verwenden. Fig. 10 zeigt beispielhafte FMCW-Multirampensignale, welche als insbesondere erstes Signal sigTX1, 1, sigTX1,2, ..., SigTX1,K bzw. sigTX2,1, sigTX2,2, ..., SigTX2,K durch den Signalgenerator SigGen1, SigGen2 als dessen Signal sigTX1 der ersten bzw. anderen / zweiten Sende-Empfangseinheiten NKSE1, NSKE2 der vorstehenden Figuren erzeugt wird. Bei diesen Multirampen-FMCW-Signalen wird eine Anzahl von vorzugsweise K gleichartig FMCW-modulierten Signalen sigTX1,1; sigTX1,2; ... sigTX1,K bzw. sigTX2,1; sigTX2,2; ... sigTX2,K in einem vorzugsweise festen Zeitabstand ausgesendet. Zum Multiplexing werden die Multirampen-FMCW-Signale in den an einer Messung beteiligten Sende-Empfangseinheiten entweder geringfügig zeit- oder frequenzversetzt ausgesendet. Unter geringfügig wird insbesondere eine Zeitverzögerung um höchstens 10% der Messrampendauer bzw. der äquivalente Frequenzversatz im Zeit-Frequenz Diagramm verstanden.

Durch das bevorzugte wechselseitige Austauschen der Signale entsteht, wie beschrieben, bei jeder einzelnen FMCW-Rampe ein FMCW-Messsignal. Somit entstehen insgesamt K FMCW-Messsignale. Vorzugsweise werden diese als Vergleichs-Vergleichssignale sigCC 12,1; sigCC 12,2; ..., sigCC 12,K nun zu einer Matrix angeordnet. Diese Datenmatrix hat bei einer zeilenweisen Anordnung der Signale z.B. die Form:

$$sigCC12Mat = \begin{pmatrix} sigCC12,1 \\ sigCC12,2 \\ \vdots \\ sigCC12,K \end{pmatrix}.$$

Wird auf diese Matrix eine zweidimensionale Fouriertransformation angewendet, so entsteht ein sogenanntes Range-Doppler-Diagramm aus dem sich insbesondere sehr genau die Entfernung- und Geschwindigkeit zwischen den nicht-kohärenten Sende-Empfangseinheiten NKSE bestimmen lässt.

Zur besseren Abstimmung der Signalgeneratoren in den verteilten Sende-Empfangseinheiten kann es sinnvoll sein, die Signalquellen in den Stationen bzw. die nicht-kohärenten Sende-Empfangseinheiten aufweisenden Vorrichtungen durch einen Austauschen von Funksignalen vor Durchführung der als bevorzugt beschriebenen Messvorgänge bzgl. Frequenz/Taktrate und Zeitoffset zu synchronisieren, da kostengünstige Oszillatoren nennenswert vom Nennwert abweichen können bzw. bei Temperaturänderungen driften. Eine Abweichung der Taktgeneratoren in den Signalquellen bewirkt z.B. eine Skalierung aller Frequenzwerte und Zeitdauern, was insbesondere die Signalmodulation und die Zeitbasis der digitalisierten Signale verzerren kann und in Folge zu fehlerhaften Vergleichsergebnissen führen könnte. Zur Synchronisation der nicht-kohärenten Sende-Empfangseinheiten sind beispielsweise ein Verfahren gemäß US 8,108,558 B2 "Circuit arrangement and method for synchronization of clocks in a network" oder ein Verfahren gemäß US 7,940,743 B2 "Method and device for the synchronization of radio stations and a time-synchronous radio bus system" geeignet. Insbesondere ist es zur Synchronisation der nicht-kohärenten Sende-Empfangseinheiten vorteilhaft das Verfahren aus US 7,940,743 B2 auf die Vergleichssignale sigC21 bzw. sigC12 anzuwenden. Insbesondere ist es hierbei vorteilhaft zumindest zwei FMCW-Radarsignale mit zumindest zwei vom Betrag oder vom Vorzeichen unterschiedlichen Sweepraten (Sweeprate: Änderung der Signalfrequenz pro Zeit) auszutauschen. Ein bevorzugte Ausführungsform verwendet hierbei zumindest zwei FMCW-Radarsignale, wobei bei einem dieser FMWC-Signale die Frequenz mit der Zeit ansteigt, was einer positiven Sweeprate entspricht, und bei einem weiteren FMCW-Signal sich die Frequenz mit der Zeit verringert, was einer negativen Sweeprate entspricht.

Insbesondere sind noch weitere als die beschriebenen Kombinationen der in den verschiedenen Figuren dargestellten oder dazu genannten alternativen verschiedenen Ausgestaltungselemente realisierbar.

Umsetzbar ist als weitere Ausgestaltung beispielsweise eine Vorauswahl eines interessanten Bereiches der Vergleichssignale sigC21, sigC12 und eine Übertragung nur dieses Bereiches über die Kommunikationseinrichtung anstelle einer Übertragung eines vollständigen Vergleichssignals. Entsprechend fällt unter den Begriff Vergleichssignal auch ein nur teilweises Vergleichssignal, solange dieses für die Bestimmung eines Vergleichs-Vergleichssignals noch ausreichend Datengehalt hat. In einem solchen Fall kann optional zusätzlich ein Indexwert übertragen werden, der angibt, welcher Bereich des Vergleichssignals übertragen wurde. Ebenso ist eine Übertragung mehrerer Bereiche bzw. Abschnitte eines solchen Vergleichssignals realisierbar.

Unter dem Übertragen der Vergleichssignale ist gemäß einer noch weiteren Ausgestaltung auch ein Übertragen der Spektren an Stelle der eigentlich erzeugten Vergleichssignale und/oder ein Übertragen abschnittsweiser Spektren umsetzbar. Realisierbar ist insbesondere auch eine Bildung eines Spektrums der beiden Vergleichssignale bzw. eine konjugiert komplexe Multiplikation auf Spektralebene zur Bildung des Vergleichs-Vergleichssignals.

## Patentansprüche

1. Verfahren in einem Radarsystem, bei dem

   - in einer ersten nicht-kohärenten Sende-Empfangseinheit (NKSE1) ein erstes Signal (sigTX1) erzeugt und über einen Pfad (SP) gesendet, insbesondere ausgestrahlt wird,
   - in einer weiteren, insbesondere zweiten nicht-kohärenten Sende-Empfangseinheit (NKSE2) ein weiteres erstes Signal (sigTX2) erzeugt und über den Pfad (SP) gesendet, insbesondere ausgestrahlt wird,
   - in der ersten Sende-Empfangseinheit (NKSE1) ein Vergleichssignal (sigC12) aus deren erstem Signal (sigTX1) und aus einem solchen von der weiteren Sende-Empfangseinheit (NKSE2) über den Pfad (SP) empfangenen weiteren ersten Signal (sigTX2), das gleichartig zum ersten gesendeten Signal (sigTX1) der ersten Sende-Empfangseinheit (NKSE1) gebildet ist, gebildet wird und
   - in der weiteren Sende-Empfangseinheit (NKSE2) ein weiteres Vergleichssignal (sigC21) aus deren weiterem erstem Signal (sigTX2) und aus einem solchen von der ersten Sende-Empfangseinheit (NKSE1) über den Pfad (SP) empfangenen ersten Signal (sigTX1), das gleichartig zum weiteren ersten Signal (sigTX2) der weiteren Sende-Empfangseinheit (NKSE2) gebildet ist, gebildet wird,
   - wobei das weitere Vergleichssignal (sigC21) von der weiteren Sende-Empfangseinheit (NKSE2) zu der ersten Sende-Empfangseinheit (NKSE1) übertragen, insbesondere kommuniziert wird, wobei ein Vergleichs-Vergleichssignal (sigCC21; sigCC12) aus diesem Vergleichssignal (sigC21) und dem weiteren Vergleichssignal (sigC21) gebildet wird,

   wobei das Vergleichs-Vergleichssignal (sigCC21; sigCC12), indem die beiden Vergleichssignale (sigC12, sigC21) miteinander verarbeitet - insbesondere konjungiert komplex multipliziert - werden, einem mit einem kohärenten Radarsystem erzeugten Vergleichssignal entspricht.

2. Verfahren nach einem vorstehenden Anspruch, bei dem Signale (sigC11, sigC22), die aufgrund Rückreflexionen gebildet sind, und ein Vergleichs-Vergleichssignal (sigCC12) bzgl. ihrer Phasen verglichen werden.

3. Verfahren nach einem vorstehenden Anspruch, bei dem Vergleichssignale (sigC12, sigC32), die auf Basis eines in einer Sende-Empfangseinheit (NKSE1, NKSE3) erzeugten und eines von einer anderen, insbesondere zweiten Sende-Empfangseinheit (NKSE2) gebildet werden, und ein Vergleichs-Vergleichssignal (sigCCN2), das auf Basis von Signalen z.B. einer N-ten Sende-Empfangseinheit (NKSE-N) und der zweiten Sende-Empfangseinheit (NKSE2) gebildet wird, bzgl. ihrer Phasen bzw. Phasenwerte ($\varphi 12$, $\varphi 32$ bis $\varphi N2$) verglichen werden.

4. Verfahren nach Anspruch 2 oder 3, bei dem der Vergleich der Phasen zur Bestimmung eines Winkels, insbesondere über Phasenmonopulsverfahren oder interferometrische Verfahren, und/oder zur Anwendung rekonstruktiven Bildgebungsverfahren, wie etwa den SAR-Rekonstruktionsverfahren oder der Breitbandholographie genutzt wird.

5. Verfahren nach einem vorstehenden Anspruch, bei dem zumindest eines von dem Vergleichssignal (sigC12), dem weiteren Vergleichssignal (sigC21) oder dem Vergleichs-Vergleichssignal (sigC21; sigC12) durch zumindest eines von Mischen oder Korrelation gebildet wird.

6. Verfahren nach einem vorstehenden Anspruch, bei dem mindestens ein solches weiteres Vergleichssignal (sigC21; sigC12) zwischen den Sende-Empfangseinheiten (NKSE2; NKSE1) als zumindest eines von Daten, einem Daten enthaltenden Signal oder einem Daten rekonstruierbar enthaltenden Signal übertragen wird.

7. Verfahren nach einem vorstehenden Anspruch, bei dem zumindest eines der ersten Signale (sigTX1, sigTX2) als ein Sendesignal über den als Luftschnittstelle ausgebildeten Pfad (SP) gesendet wird.

8. Verfahren nach einem vorstehenden Anspruch, bei dem Zeitpunkte zum Senden der ersten Signale (sigTX1, sigTX2) derart koordiniert werden, dass sich die ersten Signale (sigTX1, sigTX2) zeitlich zumindest teilweise überdecken.

9. Verfahren nach einem vorstehenden Anspruch, bei dem aus dem Vergleichs-Vergleichssignal (sigC12) der ersten Sende-Empfangseinheit (NKSE1) und/oder dem Vergleichs-Vergleichssignal (sigC21) der zweiten Sende-Empfangseinheit (NKSE1) eine Signallaufzeit ($\tau$12), die ein solches erstes Signal (sigTX1, sigTX2) für den Weg zwischen den Sende-Empfangseinheiten (NKSE1, NKSE2) benötigt, ermittelt wird, indem mindestens eines von einer Phase oder einem Phasenwert ($\varphi$12, $\varphi$13, ... $\varphi$1N, $\varphi$23, $\varphi$24, ... $\varphi$2N, $\varphi$N-1N), einer Frequenz, einem Amplituden-Verlauf oder einem Phasen-Verlauf des Vergleichs-Vergleichssignal (sigCC12) analysiert wird.

10. Verfahren nach einem vorstehenden Anspruch, bei dem zumindest eines der ersten Signale (sigTX1, sigTX2) als ein FMCW- oder OFDM-moduliertes Signal erzeugt und gesendet wird.

11. Verfahren nach einem vorstehenden Anspruch, bei dem zumindest eines der ersten Signale (sigTX1, sigTX2) als ein Multirampen-Signal erzeugt und gesendet wird.

12. Verfahren nach einem vorstehenden Anspruch, bei dem

 - mehrere Vergleichs-Vergleichssignale (sigCC12), die mit zumindest zwei Sende-Empfangseinheiten (NKSE1, NKSE2), von denen sich zumindest eine der Sende-Empfangseinheiten (NKSE1, NKSE2) bewegt, zeitlich nacheinander gemessen werden und
 - mit einem synthetische Apertur-Verfahren zumindest eines von einer Entfernung, einer Position, einer Geschwindigkeit oder das Vorhandensein einer der Sende-Empfangseinheiten (NKSE2, NKSE1) oder das Vorhandensein einer solchen Sende-Empfangseinheiten (NKSE2, NKSE1) oder zumindest eines von einer Entfernung, einer Position, einer Geschwindigkeit relativ zu einem Objekt (O) oder das Vorhandensein eines Objekts (O) bestimmt wird.

13. Radarsystem, bei dem

 - zumindest eine erste nicht-kohärente Sende-Empfangseinheit (NKSE1) ausgebildet ist, ein erstes Signal (sigTX1) zu erzeugen und über einen Pfad (SP) zu senden, insbesondere auszustrahlen,
 - zumindest eine weitere, insbesondere zweite nicht-kohärenten Sende-Empfangseinheit (NKSE2) ausgebildet ist, ein weiteres erstes Signal (sigTX2) zu erzeugen und über den Pfad (SP) zu senden, insbesondere auszustrahlen,
 - die erste Sende-Empfangseinheit (NKSE1) ausgebildet ist, ein Vergleichssignal (sigC12) aus deren erstem Signal (sigTX1) und aus einem solchen von der weiteren Sende-Empfangseinheit (NKSE2) über den Pfad (SP) empfangenen weiteren ersten Signal (sigTX2), das gleichartig zum ersten gesendeten Signal (sigTX1) der ersten Sende-Empfangseinheit (NKSE1) gebildet ist, zu bilden,
 - die weitere Sende-Empfangseinheit (NKSE2) ausgebildet ist, ein weiteres Vergleichssignal (sigC21) aus deren weiteren erstem Signal (sigTX2) und aus einem solchen von der ersten Sende-Empfangseinheit (NKSE1) über den Pfad (SP) empfangenen ersten Signal (sigTX1), das gleichartig zum weiteren ersten Signal (sigTX2) der weiteren Sende-Empfangseinheit (NKSE2) gebildet ist, zu bilden, und
 - das weitere Vergleichssignal (sigC21) von der weiteren Sende-Empfangseinheit (NKSE2) zu der ersten Sende-Empfangseinheit (NKSE1) übertragen wird, insbesondere kommuniziert wird,

 wobei ein Vergleichs-Vergleichssignal (sigCC21; sigCC12) aus diesem Vergleichssignal (sigC21) und dem weiteren Vergleichssignal (sigC21) gebildet wird,

 wobei das Vergleichs-Vergleichssignal (sigCC21; sigCC12), indem die beiden Vergleichssignale (sigC12, sigC21) miteinander verarbeitet - insbesondere konjugiert komplex multipliziert - werden, einem mit einem kohärenten Radarsystem erzeugten Vergleichssignal entspricht.

14. Radarsystem nach Anspruch 13 mit drei oder mehr räumlich beabstandeten Sende-Empfangseinheiten (NKSE1, NKSE2, NKSE3, ..., NKSE-N), bei dem aus zwei oder mehr Vergleichs-Vergleichssignalen (sigCC12, sigCC12, sigCC13, sigCC22, ..., sigCC32), die mit mehr als zwei Paaren aus jeweils zwei der räumlich beabstandeten der Sende-Empfangseinheiten (NKSE1, NKSE2; NKSE-N, NKSE2) gemessen werden, eine Entfernung, eine Position, eine Geschwindigkeit oder das Vorhandensein einer der Sende-Empfangseinheiten (NKSE2, NKSE1) oder das Vorhandensein einer solchen Sende-Empfangseinheiten (NKSE2, NKSE1) oder zumindest eines von einer Entfernung, einer Position, einer Geschwindigkeit relativ zu einem Objekt (O) oder das Vorhandensein eines Objekts (O) bestimmt wird.

15. Radarsystem nach einem der Ansprüche 13 oder 14, bei dem die erste Sende-Empfangseinheit (NKSE1) und zumindest eine solche weitere Sende-Empfangseinheit (NKSE2) und/oder eine Auswerteeinrichtung (P) ausgebildet sind zum Durchführen eines Verfahrens nach einem vorhergehenden Ansprüche.

16. Vorrichtung eines Radarsystems, insbesondere zum Durchführen eines Verfahrens nach einem der Ansprüche 1 bis 12 und/oder in einem Radarsystem nach einem der Ansprüche 13 bis 15, wobei die Vorrichtung

- ausgebildet ist als eine erste nicht-kohärente Sende-Empfangseinheit (NKSE1), insbesondere erste nicht-kohärente Sende-Empfangseinheit (NKSE1) und
- einen Signalgenerator und zumindest eine Antenne (TA1; RA1) aufweist, die ausgebildet sind, ein erstes Signal (sigTX1) zu erzeugen und über einen Pfad (SP) zu senden, insbesondere auszustrahlen,
- eine Anordnung aufweist, die ausgebildet ist, ein Vergleichssignal (sigC12) aus dem ersten Signal (sigTX1) und aus einem derartigen von einer weiteren Sende-Empfangseinheit (NKSE2) über den Pfad (SP) empfangenen ersten Signal (sigTX2), das gleichartig zum ersten gesendeten Signal (sigTX1) der ersten Sende-Empfangseinheit (NKSE1) gebildet ist, zu bilden
- und zumindest eines von
- einer Schnittstelle (CommTX) aufweist, die ausgebildet ist, das Vergleichssignal (sigC12) zu der weiteren Sende-Empfangseinheit (NKSE2) zu übertragen, insbesondere zu kommunizieren oder
- einer Schnittstelle (CommRX) aufweist, die ausgebildet ist, ein derartiges von der weiteren Sende-Empfangseinheit (NKSE2) erzeugtes weiteres Vergleichssignal (sigC21) mittels Übertragen, insbesondere Kommunizieren, in der ersten Sende-Empfangseinheit (NKSE1) zu erhalten,

wobei die Vorrichtung eine weitere Vergleichseinheit (sigComp12) umfasst, die ein Vergleichs-Vergleichssignal (sigCC12) bildet aus dem in der selben Sende-Empfangseinheit (NKSE1) gebildeten Vergleichssignal (sigC21) und einem zu dieser Sende-Empfangseinheit (NKSE1) übertragenen Vergleichssignal (sigC21), wobei das Vergleichs-Vergleichssignal (sigCC21; sigCC12), indem die beiden Vergleichssignale (sigC12, sigC21) miteinander verarbeitet - insbesondere konjungiert komplex multipliziert - werden, einem mit einem kohärenten Radarsystem erzeugten Vergleichssignal entspricht.

17. Vorrichtung nach Anspruch 16, bei der die zumindest eine Schnittstelle (CommTX, CommRX) eine Datenschnittstelle ist.

18. Vorrichtung nach einem der Ansprüche 16 oder 17, bei der zwischen der Anordnung, die das Vergleichssignal (sigC12) ausgibt, und der weiteren Vergleichseinheit (sigComp12), die das Vergleichs-Vergleichssignal (sigCC12) bildet, ein Filter (FLT) angeordnet ist, wobei der Filter (FLT) an die Vergleichseinheit (sigComp12) das Vergleichssignal (sigC12) anlegt, wobei der Filter (FLT) ein weiteres in der dem Filter (FLT) vorgeschalteten Anordnung gebildetes Vergleichssignal (sigC11) nicht anlegt und das in der vorgeschalteten Anordnung gebildete Vergleichssignal (sigC11) unterdrückt oder an einem Anschluss bereitstellt.

19. Vorrichtung nach einem der Ansprüche 16 bis 18, die eine Vielzahl von zueinander räumlich beabstandeten Empfangsantennen (RA1,1, ..., RA1,N; RA2,1, ..., RA2,N) aufweist, welcher jeweils eine Anordnung zugeordnet ist, die ausgebildet ist, jeweils ein Vergleichssignal (sigC21,1, sigC21,2, sigC21,3) aus dem erstem Signal (sigTX2) und aus einem derartigen von einer solchen weiteren Sende-Empfangseinheit (NKSE2) über den Pfad (SP) empfangenen ersten Signal

**Claims**

1. A method in a radar system, in which

- a first signal (sigTX1) is generated in a first non-coherent transmitting-receiving unit (NKSE1) and is transmitted, especially emitted, via a path (SP),
- a further first signal (sigTx2) is generated in a further, especially second, non-coherent transmitting-receiving unit (NKSE2) and is transmitted, especially emitted, via the path (SP),
- in the first transmitting-receiving unit (NSKE1), a comparison signal (sigC12) is formed from its first signal (sigTX1) and from such a further first signal (sigTX2) received from the further transmitting-receiving unit (NKSE2) via the path (SP), which is generated congeneric to the first sent signal (sigTX1) of the first transmitting-receiving unit (NKSE1), and
- in the further transmitting-receiving unit (NSKE2), a further comparison signal (sigC21) is formed from its further first signal (sigTX2) and from such a first signal (sigTX1) received from the first transmitting-receiving unit (NKSE1) via the path (SP), which is generated congeneric to the further first signal (sigTX2) of the further transmitting-receiving unit (NKSE2),

- wherein the further comparison signal (sigC21) is transmitted, especially communicated, from the further transmitting-receiving unit (NKSE2) to the first transmitting-receiving unit (NKSE1),

wherein a comparison-comparison signal (sigCC21; sigCC12) is formed from said comparison signal (sigC21) and the further comparison signal (sigC21),

wherein the comparison-comparison signal (sigCC21; sigCC12) corresponds to a comparison signal generated by a coherent radar system by processing - especially multiplying in a conjugated complex manner - the two comparison signals (sigC12, sigC21) with each other.

2. Method according to a preceding claim, wherein signals (sigC11, sigC22), which are formed as a result of back-reflections, and a comparison-comparison signal (sigCC12) are compared with respect to their phases.

3. Method according to a preceding claim, wherein the comparison signals (sigC12, sigC32) which are formed on the basis of a signal generated in a transmitting-receiving unit (NKSE1, NKSE3) and one generated by the other, especially the second, transmitting-receiving unit (NKSA2), and the comparison-comparison signal (sigCCN2), which is formed on the basis of signals of, for example, a $N^{th}$ transmitting-receiving unit (NKSE-N) and the second transmitting-receiving unit (NKSE2) are compared with respect to the phases or phase values ($\varphi12$, $\varphi32$ to $\varphi N2$).

4. Method according to 2 or 3, wherein the comparison of the phase is used for determination of an angle, in particular by a phase monopulse method or interferometric methods, and/or for reconstructive detection methods such as a SAR reconstruction method or broadband holography.

5. A method according to a preceding claim, wherein at least one of the comparison signal (sigC12), the further comparison signal (sigC21) or the comparison-comparison signal (sigC21; sigC12) is formed by at least one of mixing or correlation.

6. A method according to a preceding claim, wherein at least one such further comparison signal (sigC21; sigC12) is transmitted between the transmitting-receiving units (NKSE1, NKSE2) as at least one of data, a signal containing data or a signal containing data that can be reconstructed.

7. A method according to a preceding claim, wherein at least one of the first signals (sigTX1, sigTX2) is transmitted as a transmission signal via the path (SP) formed as an air interface.

8. A method according to a preceding claim, wherein the points in time for transmitting the first signals (sigTX1, sigTX2) are coordinated in such a way that the first signals (sigTX1, sigTX2) overlap each other temporally at least in part.

9. A method according to a preceding claim, wherein a signal propagation delay (T12), which is required by such a first signal (sigTX1, sigTX2) for the path between the transmitting-receiving units (NKSE1, NKSE2), is determined from the comparison-comparison signal (sigC21; sigC12) of the first transmitting-receiving unit (NKSE1) and/or from the comparison-comparison signal (sigC21) of the second transmitting-receiving unit (NKSE2) by analysing at least one of a phase or phase value ($\varphi12$, $\varphi13$, ... $\varphi1N$, $\varphi23$, $\varphi24$, ... $\varphi2N$, $\varphi N-1N$), a frequency, an amplitude progression or a phase progression of the comparison-comparison signal (sigCC12).

10. A method according to a preceding claim, wherein at least one of the first signals (sigTX1, sigTX2) is generated and transmitted as an FMCW- or OFDM-modulated signal.

11. A method according to a preceding claim, wherein at least one of the first signals (sigTX1, sigTX2) is generated and transmitted as a multi-ramp signal.

12. A method according to a preceding claim, wherein

- several comparison-comparison signals (sigCC12) are measured one after the other in respect of time by means of at least two transmitting-receiving units (NKSE1, NKSE2), of which at least one of the transmitting-receiving units (NKSE1, NKSE2) moves, and
- at least one of a distance, a position, a velocity or a presence of one of the transmitting-receiving units (NKSE1, NKSE2) or the presence of one such a transmitting-receiving unit (NKSE1, NKSE2), or at least one of a distance, a position, a velocity relative to an object (O) or the presence of an object (0) is determined by a synthetic aperture method.

**13.** A radar system, in which

- at least one first non-coherent transmitting-receiving unit (NKSE1) is formed to generate a first signal (sigTX1) and to transmit, especially emit, said signal via a path (SP),
- at least one further, especially second, non-coherent transmitting receiving unit (NSKE2) is formed to generate a further first signal (sigTX2) and to transmit, especially emit, said signal via the path (SP),
- the first transmitting-receiving unit (NKSE1) is formed to form a comparison signal (sigC12) from its first signal (sigTX1) and from such a further first signal (sigTX2) received from the further transmitting-receiving unit (NKSE2) via the path (SP), which is generated congeneric to the first sent signal (sigTX1) of the first transmitting-receiving unit (NKSE1),
- the further transmitting-receiving unit (NSKE2) is formed to form a further comparison signal (sigC21) from its further first signal (sigTX2) and from such a first signal (sigTX1) received from the transmitting receiving unit (NSKE1) via the path (SP), which is generated congeneric to the further first signal (sigTX2) of the further transmitting-receiving unit (NKSE2), and
- the further comparison signal (sigC21) is transmitted, especially communicated, from the further transmitting-receiving unit (NSKE2) to the first transmitting receiving unit (NSKE1),

wherein a comparison-comparison signal (sigCC21; sigCC12) is formed from said comparison signal (sigC21) and the further comparison signal (sigC21), wherein the comparison-comparison signal (sigCC21; sigCC12) corresponds to a comparison signal generated by a coherent radar system by processing - especially multiplying in a conjugated complex manner - the two comparison signals (sigC12, sigC21) with each other.

**14.** A radar system according to claim 13, comprising three or more spatially spaced transmitting-receiving units (NKSE1, NKSE2, NKSE3, ..., NKSE-N), in which from two or more comparison-comparison signals (sigCC12, sigCC12, sigCC13, sigCC22, ..., sigCC32), which are measured with more than two pairs from two each of the spatially spaced transmitting-receiving units (NKSE1, NKSE2; NKSE-N, NKSE2), a distance, a position, a velocity or the presence of one of the transmitting-receiving units (NKSE2, NKSE1) or the presence of such a transmitting receiving unit (NKSE2, NKSE1) or at least one of a distance, a position, a velocity relative to an object (O) or the presence of an object (O) is determined.

**15.** A radar system according to one of the claims 13 or 14, wherein the first transmitting-receiving unit (NKSE1) and at least one such further transmitting-receiving unit (NKSE2) and/or an evaluation device (P) are formed to carry out a method according to one of the preceding claims.

**16.** An apparatus of a radar system, especially for carrying out a method according to one of the claims 1 to 12 and/or in a radar system according to one of the claims 13 to 15, wherein the apparatus

- is formed as a first non-coherent transmitting-receiving unit (NKSE1), especially a first non-coherent transmitting-receiving unit (NKSE1), and
- comprises a signal generator and at least one antenna (TA1; RA1) which are formed to generate a first signal (sigTX1) and to transmit, especially emit, said signal via a path (SP),
- comprises an arrangement which is formed to form a comparison signal (sigC12) from the first signal (sigTX1) and from such a further first signal (sigTX2) received from a further transmitting-receiving unit (NSKE2) via the path (SP), which is generated congeneric to the first sent signal (sigTX1) of the first transmitting-receiving unit (NKSE1),
- and comprises at least one of

  • an interface (CommTX) which is formed to transmit, especially communicate, the comparison signal (sigC12) to the further transmitting-receiving unit (NKSE2), or
  • an interface (CommTX) which is formed to receive such a further comparison signal (C21), which is generated by the further transmitting-receiving unit (NKSE2), by means of transmission, especially communication, in the first transmitting-receiving unit (NKSE1),

wherein the apparatus comprises a further comparison unit (sigComp12) which forms a comparison-comparison signal (sigC12) from the comparison signal (sigC21) formed in the same transmitting-receiving unit (NKSE1) and from a comparison signal (sigC21) transmitted to said transmitting-receiving unit (NKSE1),
wherein the comparison-comparison signal (sigCC21; sigCC12) corresponds to a comparison signal generated by a coherent radar system by processing - especially multiplying in a conjugated complex manner - the two comparison signals (sigC12, sigC21) with each other.

**17.** An apparatus according to claim 16, wherein the at least one interface (CommTX, CommRX) is a data interface.

**18.** An apparatus according to one of the claims 16 or 17, wherein a filter (FLT) is arranged between the arrangement which outputs the comparison signal (sigC12) and the further comparison unit (sigComp12) which forms the comparison-comparison signal (sigCC12), wherein the filter (FLT) applies the comparison signal (C12) to the comparison unit (sigComp12), wherein the filter (FLT) does not apply a further comparison signal (sigC11) formed in the arrangement upstream of the filter (FLT) and suppresses the comparison signal (sigC11) formed in the upstream arrangement or provides it to a connection.

**19.** An apparatus according to one of the claims 16 to 18, which comprises a plurality of mutually spatially spaced receiving antennas (RA1, 1, ..., RA1, N; RA2, 1, ..., RA2, N) which is each associated with an arrangement which is formed to form a respective comparison signal (sigC21, 1, sigC21, 2, sigC21, 3) from the first signal (sigTX2) and from such a first signal (sigTX1) received from such a further transmitting-receiving unit (NKSE2) via the path (SP).

**Revendications**

**1.** Procédé dans un système de radar, dans lequel

- un premier signal (sigTX1) est généré et envoyé, en particulier émis, par un chemin (SP) dans une première unité d'émission-réception non cohérente (NKSE1),
- un autre premier signal (sigTX2) est généré et envoyé, en particulier émis, par le chemin (SP) dans une autre unité d'émission-réception non cohérente (NKSE2),
- dans la première unité d'émission-réception (NKSE1), un signal de comparaison (sigC12) est formé à partir de son premier signal (sigTX1) et d'un tel autre premier signal (sigTX2) qui est reçu de l'autre unité d'émission-réception (NKSE2) par le chemin (SP) et formé de la même manière que le premier signal envoyé (sigTX1) de la première unité d'émission-réception (NKSE1), et
- dans l'autre unité d'émission-réception (NKSE2), un autre signal de comparaison (sigC21) est formé à partir de son autre premier signal (sigTX2) et d'un tel premier signal (sigTX1) qui est reçu de la première unité d'émission-réception (NKSE1) par le chemin (SP) et formé de la même manière que l'autre premier signal (sigTX2) de l'autre unité d'émission-réception (NKSE2),
- dans lequel l'autre signal de comparaison (sigC21) est transmis, en particulier communiqué, de l'autre unité d'émission-réception (NKSE2) à la première unité d'émission-réception (NKSE1), dans lequel un signal de comparaison de comparaisons (sigCC21 ; sigCC12) est formé à partir de ce signal de comparaison (sigC21) et de l'autre signal de comparaison (sigC21),
- dans lequel le signal de comparaison de comparaisons (sigCC21 ; sigCC12), en traitant les deux signaux de comparaison (sigC12, sigC21) ensemble, en particulier par multiplication avec le complexe conjugué, correspond à un signal de comparaison généré avec un système de radar cohérent.

**2.** Procédé selon l'une des revendications précédentes, dans lequel des signaux (sigC11, sigC22) qui sont formés en raison de réflexions en retour et un signal de comparaison de comparaisons (sigCC12) sont comparés en ce qui concerne leurs phases.

**3.** Procédé selon l'une des revendications précédentes, dans lequel des signaux de comparaison (sigC12, sigC32) qui sont formés sur la base d'un signal généré dans une unité d'émission-réception (NKSE1, NKSE3) et d'un signal généré par une autre, en particulier une deuxième unité d'émission-réception (NKSE2), et un signal de comparaison de comparaisons (sigCCN2) qui est formé sur la base de signaux par exemple d'une N$^{\text{ième}}$ unité d'émission-réception (NKSE-N) et de la deuxième unité d'émission-réception (NKSE2), sont comparés en ce qui concerne leurs phases ou leurs valeurs de phase ($\varphi12$, $\varphi32$ à $\varphi N2$).

**4.** Procédé selon la revendication 2 ou 3 dans lequel la comparaison des phases est utilisée pour déterminer un angle, en particulier au moyen de procédés monopulse en phase ou de procédés interférométriques et/ou pour l'application de procédés d'imagerie reconstructive, tels que les procédés de reconstruction SAR ou l'holographie à large bande.

5. Procédé selon l'une des revendications précédentes, dans lequel au moins l'un du signal de comparaison (sigC12), de l'autre signal de comparaison (sigC21) ou du signal de comparaison de comparaisons (sigC21 ; sigC12) est formé par mélange et/ou par corrélation.

6. Procédé selon l'une des revendications précédentes, dans lequel au moins un tel autre signal de comparaison (sigC21 ; sigC12) est transmis entre les unités d'émission-réception (NKSE2 ; NKSE1) en tant que données, signal contenant des données et/ou signal contenant des données reconstructibles.

7. Procédé selon l'une des revendications précédentes, dans lequel au moins l'un des premiers signaux (sigTX1, sigTX2) est transmis en tant que signal d'émission par le chemin (SP) réalisé sous la forme d'une interface radio.

8. Procédé selon l'une des revendications précédentes, dans lequel des instants d'envoi des premiers signaux (sigTX1, sigTX2) sont coordonnés de telle sorte que les premiers signaux (sigTX1, sigTX2) se recouvrent au moins partiellement dans le temps.

9. Procédé selon l'une des revendications précédentes, dans lequel un temps de propagation de signal (T12) que nécessite un tel premier signal (sigTX1, sigTX2) pour le trajet entre les unités d'émission-réception (NKSE1, NKSE2) est déterminé à partir du signal de comparaison de comparaisons (sigC12) de la première unité d'émission-réception (NKSE1) et/ou du signal de comparaison de comparaisons (sigC21) de la deuxième unité d'émission-réception (NKSE1) en analysant au moins un élément parmi une phase ou une valeur de phase ($\varphi 12$, $\varphi 13$, ... $\varphi 1N$, $\varphi 23$, $\varphi 24$, ... $\varphi 2N$, $\varphi N$-$1N$), une fréquence, une courbe d'amplitude ou une courbe de phase du signal de comparaison de comparaisons (sigCC12).

10. Procédé selon l'une des revendications précédentes, dans lequel au moins l'un des premiers signaux (sigTX1, sigTX2) est généré et envoyé sous la forme d'un signal modulé FMCW ou OFDM.

11. Procédé selon l'une des revendications précédentes, dans lequel au moins l'un des premiers signaux (sigTX1, sigTX2) est généré et envoyé sous la forme d'un signal multirampe.

12. Procédé selon l'une des revendications précédentes, dans lequel

- plusieurs signaux de comparaison de comparaisons (sigCC12) sont mesurés l'un après l'autre dans le temps par au moins deux unités d'émission-réception (NKSE1, NKSE2), dont au moins l'une des unités d'émission-réception (NKSE1, NKSE2) se déplace, et
- on détermine par un procédé d'ouverture synthétique au moins un élément parmi une distance, une position, une vitesse ou la présence d'une des unités d'émission-réception (NKSE2, NKSE1) ou la présence de telles unités d'émission-réception (NKSE2, NKSE1) ou au moins un élément parmi une distance, une position, une vitesse par rapport à un objet (O) ou la présence d'un objet (O).

13. Système de radar dans lequel

- au moins une première unité d'émission-réception non cohérente (NKSE1) est conçue pour générer et envoyer, en particulier émettre, un premier signal (sigTX1) par un chemin (SP),
- au moins une autre, en particulier une deuxième unité d'émission-réception non cohérente (NKSE2) est conçue pour générer et envoyer, en particulier émettre, un autre premier signal (sigTX2) par le chemin (SP),
- la première unité d'émission-réception (NKSE1) est conçue pour former un signal de comparaison (sigC12) à partir de son premier signal (sigTX1) et d'un tel autre premier signal (sigTX2) qui est reçu de l'autre unité d'émission-réception (NKSE2) par le chemin (SP) et formé de la même manière que le premier signal envoyé (sigTX1) de la première unité d'émission-réception (NKSE1),
- l'autre unité d'émission-réception (NKSE2) est conçue pour former un autre signal de comparaison (sigC21) à partir de son autre premier signal (sigTX2) et d'un tel premier signal (sigTX1) qui est reçu de la première unité d'émission-réception (NKSE1) par le chemin (SP) et formé de la même manière que l'autre premier signal (sigTX2) de l'autre unité d'émission-réception (NKSE2), et
- l'autre signal de comparaison (sigC21) est transmis, en particulier communiqué, de l'autre unité d'émission-réception (NKSE2) à la première unité d'émission-réception (NKSE1),

dans lequel un signal de comparaison de comparaisons (sigCC21 ; sigCC12) est formé à partir de ce signal de comparaison (sigC21) et de l'autre signal de comparaison (sigC21),

dans lequel le signal de comparaison (sigCC21 ; sigCC12), en traitant les deux signaux de comparaison (sigC12, sigC21) ensemble, en particulier par multiplication du complexe conjugué, correspond à un signal de comparaison généré avec un système de radar cohérent.

14. Système de radar selon la revendication 13 avec trois unités d'émission-réception espacées spatialement ou plus (NKSE1, NKSE2, NKSE3, ..., NKSE-N), dans lequel on détermine, à partir de deux signaux de comparaison de comparaisons ou plus (sigCC12, sigCC12, sigCC13, sigCC22, ..., sigCC32) qui sont mesurés par plus de deux paires constituées chacune de deux des unités d'émission-réception espacées spatialement (NKSE1, NKSE2 ; NKSE-N, NKSE2), une distance, une position, une vitesse ou la présence d'une des unités d'émission-réception (NKSE2, NKSE1) ou la présence de telles unités d'émission-réception (NKSE2, NKSE1) ou au moins un élément parmi une distance, une position, une vitesse par rapport à un objet (O) ou la présence d'un objet (O).

15. Système de radar selon l'une des revendications 13 ou 14, dans lequel la première unité d'émission-réception (NKSE1) et au moins une telle autre unité d'émission-réception (NKSE2) et/ou un dispositif d'évaluation (P) sont conçus pour mettre en œuvre un procédé selon l'une des revendications précédentes.

16. Dispositif d'un système de radar, en particulier pour la mise en œuvre d'un procédé selon l'une des revendications 1 à 12 et/ou dans un système de radar selon l'une des revendications 13 à 15, dans lequel le dispositif

- est conçu comme une première unité d'émission-réception non cohérente (NKSE1), en particulier une première unité d'émission-réception non cohérente (NKSE1) et
- présente un générateur de signaux et au moins une antenne (TA1 ; RA1) qui sont conçus pour générer et envoyer, en particulier émettre, un premier signal (sigTX1) par un chemin (SP),
- présente un agencement qui est conçu pour former un signal de comparaison (sigC12) à partir du premier signal (sigTX1) et d'un tel premier signal (sigTX2) qui est reçu d'une autre unité d'émission-réception (NKSE2) par le chemin (SP) et formé de la même manière que le premier signal envoyé (sigTX1) de la première unité d'émission-réception (NKSE1),
- et présente au moins une interface parmi
- une interface (CommTX) qui est conçue pour transmettre, en particulier pour communiquer, le signal de comparaison (sigC12) à l'autre unité d'émission-réception (NKSE2) et
- une interface (CommRX) qui est conçue pour obtenir un tel autre signal de comparaison (sigC21) généré par l'autre unité d'émission-réception (NKSE2) par transmission, en particulier par communication, dans la première unité d'émission-réception (NKSE1),

dans lequel le dispositif comprend une autre unité de comparaison (sigComp12) qui forme un signal de comparaison de comparaisons (sigCC12) à partir du signal de comparaison (sigC21) formé dans la même unité d'émission-réception (NKSE1) et d'un signal de comparaison (sigC21) transmis à cette unité d'émission-réception (NKSE1),

dans lequel le signal de comparaison de comparaisons (sigCC21, sigCC12), en traitant les deux signaux de comparaison (sigC12, sigC21) ensemble, en particulier par multiplication du complexe conjugué, correspond à un signal de comparaison généré avec un système de radar cohérent.

17. Dispositif selon la revendication 16, dans lequel ladite au moins une interface (CommTX, CommRX) est une interface de données.

18. Dispositif selon l'une des revendications 16 ou 17, dans lequel un filtre (FLT) est disposé entre l'agencement qui délivre le signal de comparaison (sigC12) et l'autre unité de comparaison (sigComp12) qui forme le signal de comparaison de comparaisons (sigCC12), dans lequel le filtre (FLT) applique le signal de comparaison (sigC12) à l'unité de comparaison (sigComp12), dans lequel le filtre (FLT) n'applique pas un autre signal de comparaison (sigC11) formé dans l'agencement en amont du filtre (FLT) et supprime le signal de comparaison (sigC11) formé dans l'agencement en amont ou le rend disponible à une connexion.

19. Dispositif selon l'une des revendications 16 à 18, qui présente une pluralité d'antennes de réception (RA1,1, ..., RA1,N; RA2,1, ..., RA2,N) espacées spatialement les unes des autres, à chacune desquelles est associé un agencement qui est conçu pour former à chaque fois un signal de comparaison (sigC21,1, sigC21,2, sigC21,3) à partir du premier signal (sigTX2) et d'un tel premier signal (sigTX1) reçu d'une telle autre unité d'émission-réception (NKSE2) par le chemin (SP).

Fig. 1

Fig. 2

Fig. 3

NKSE2 $\vec{p}_2$

NKSE-N $\vec{p}_N$

NKSE3 $\vec{p}_3$

NKSE1 $\vec{p}_1$

sigCCN2

sigCC32

sigCC12

Auswertung

P

Fig. 4

NKSE2
$\vec{p}_2, \vec{v}_2 = 0$

NKSE1
$\vec{p}_1(t), \vec{v}_1 \neq 0$

$\vec{v}_1$

sigCC12

Fig. 5

Fig. 6

NKSE2

ADC1

ADC2

ADC-M

SigComp2

sigC21,1, sigC21,2
sigC21,3

SigGen2

Comm
TRX

Mix  Mix  Mix

RA2,1  RA2,2  RA2,M

sigTX2

TA2

CA2

NKSE1

TA1

sigTX1

CW
SigGen1

RA1

Mix

ADC

Comm
RX

SigComp12

sigCC121, sigCC122, ... sigCC12N

Fig. 7

Fig. 8

NKSE1

SigGen1 → TA 1

sigTX1

ADC1 ← Mix ← RA1, 1

ADC2 ← Mix ← RA1, 2

ADC-N ← Mix ← RA1, N

sigCC112
sigCC122
...
sigCC1N2

← SigComp12 ← Comm TRX ← CA 1

NKSE2

sigC21 + sigC22 → Mix → sigRX21 + — RA2

sigRX22

ADC

CW SigGen2 → sigTX2 → TA 2

FLT

sigC21 → Comm TRX → CA 2

Fig. 9

Signal-
Frequenz

sigTX1,1    sigTX1,2                    sigTX1,K

Zeit

Signal-
Frequenz

sigTX2,1    sigTX2,2                    sigTX2,K

sigCC12,1
sigCC12,2                               Zeit

...

sigCC12,K

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2010019975 A1
- US 2001004601 A1
- US 7948431 B2
- US 8299959 B2
- US 7940743 B2
- US 020140022111 A1
- US 8108558 B2

### In der Beschreibung aufgeführte Nicht-Patentliteratur

- Precise distance measurement with cooperative FM-CW radar units. **STELZER A. et al.** Radio and Wireless Symposium, 2008 IEEE. IEEE, 22. Januar 2008, 771-774
- A 77-GHz FMCW MIMO radar based on loosely coupled stations. **FEGER R. et al.** Microwave Conference (GMIC), 2012 The 7th German. IEEE, 12. Marz 2012, 1-4
- A 77-GHz cooperative secondary radar system for local positioning applications. **FEGER R. et al.** Microwave Symposium Digest (MTT), 2012 IEEE MTT-S International. IEEE, 17. Juni 2012, 1-3
- **FACHBUCH.** Inverse Synthetic Aperture Radar Imaging with Matlab Algorithms
- **R. MIESEN ; F. KIRSCH ; M. VOSSIEK.** UHF RFID Localization Based on Synthetic Apertures. *IEEE Transactions on Automation Science and Engineering,* Juli 2013, vol. 10 (3), 807-815
- **G. LI ; R. EBELT ; M. VOSSIEK.** A Novel Sequential Monte Carlo Method Based Synthetic Aperture Reconstruction Approach for Real-Time 3D Wireless Local Positioning. *Frequenz: Journal of RF-Engineering and Telecommunications,* November 2012, vol. 66 (11-12), 363-371
- **RUF, CS. ; SWIFT, CT. ; TANNER, A.B. ; LE VINE, D.M.** Interferometric synthetic aperture microwave radiometry for the remote sensing of the Earth. *Geoscience and Remote Sensing, IEEE Transactions on,* September 1988, vol. 26 (5), 597, , 611
- A New Technology for Precise Position Measurement-LPM. **STELZER, A. ; FISCHER, A. ; VOSSIEK, M.** Microwave Symposium Digest. IEEE MTT-S International, 06. Juni 2004, vol. 2, 655-658
- **R. GIERLICH ; J. HUTTNER ; A. ZIROFF ; M. HUEMER.** Indoor positioning utilizing fractional-N PLL synthesizer and multi-channel base stations. *Wireless Technology, 2008, EuWiT 2008, European Conference on,* 2008, 49-52
- **ROEHR, S. ; GULDEN, P. ; VOSSIEK, M.** Precise Distance and Velocity Measurement for Real Time Locating in Multipath Environments Using a Frequency-Modulated Continuous-Wave Secondary Radar Approach. *Microwave Theory and Techniques, IEEE Transactions on,* Oktober 2008, vol. 56 (10), 2329, , 2339
- **STURM, CHRISTIAN et al.** Spectrally interleaved multicarrier signals for radar network applications and multi-input multi-output radar. *IET Radar, Sonar & Navigation,* 2013, vol. 7 (3), 261-269
- Receive signal processing for OFDM-based radar imaging. **GUTIERREZ DEL ARROYO ; JOSE R. ; JACKSON, JULIE ANN ; TEMPLE, MICHAEL A.** Acoustics, Speech and Signal Processing (ICASSP), 2013 IEEE International Conference on. IEEE, 2013, 2775-2779
- **ALI, F. ; VOSSIEK, M.** Detection of weak moving targets based on 2-D range-Doppler FMCW radar Fourier processing. *German Microwave Conference,* 2010, 214, , 217
- Performance analysis of cooperative FMCW radar distance measurement Systems. **SCHEIBLHOFER, STEFAN et al.** Microwave Symposium Digest, 2008 IEEE MTT-S International. IEEE, 2008, 121-124